# EUROPÄISCHE PATENTSCHRIFT

(11) **EP 2 448 740 B1**
(45) Veröffentlichungstag und Bekanntmachung des Hinweises auf die Patenterteilung: **05.03.2014**
(21) Anmeldenummer: 10726910.2
(22) Anmeldetag: 18.06.2010
(51) Int. Cl.: B29C 45/14, B29C 43/18, B44C 1/16, B32B 27/08, B32B 7/06, B32B 27/28, B32B 27/36

(54) **MEHRSCHICHTKÖRPER**
MULTILAYER BODY
CORPS MULTICOUCHE

(30) Priorität: 01.07.2009 DE 102009031478
(43) Veröffentlichungstag der Anmeldung: 09.05.2012
(73) Patentinhaber: Leonhard Kurz Stiftung & Co. KG, 90763 Fürth (DE)
(72) Erfinder: SCHMIDT, Jürgen, 91154 Roth (DE); JUNGMANN, Gert, 90763 Fürth (DE); ATTNER, Juri, 90559 Burgthann (DE)
(74) Vertreter: Zinsinger, Norbert
(86) Internationale Anmeldenummer: PCT/EP2010/003695
(87) Internationale Veröffentlichungsnummer: WO 2011/000485

(56) Entgegenhaltungen:
- DE-B3-102004 041 868
- DATABASE WPI Week 200701 Thomson Scientific, London, GB; AN 2007-004296 XP002595564 -& JP 2006 305898 A (YOSHIDA KOGYO KK) 9. November 2006 (2006-11-09)

## Beschreibung

Die Erfindung betrifft einen Mehrschichtkörper zur Herstellung eines dekorierten, ein Oberflächenrelief aufweisenden Kunststoffartikels sowie ein Verfahren zur Herstellung eines solchen Mehrschichtkörpers. Die Erfindung betrifft weiterhin zwei Verfahren zur Herstellung eines dekorierten, ein Oberflächenrelief aufweisenden Spritzgussartikels unter Verwendung eines solchen Mehrschichtkörpers.

Dekorierte, ein Oberflächenrelief aufweisende Kunststoffartikel, z.B. Spritzgussartikel, Verfahren zu ihrer Herstellung, sowie Mehrschichtkörper wie Inmould-fähige Transferfolien oder IMD-Folien zur Verwendung in diesen Verfahren sind bekannt (IMD = Inmould Decoration). Dekorierte Spritzgussartikel mit taktil wahrnehmbaren Strukturen werden insbesondere für Automobil-Innenteile wie Türleisten, Leisten in Instrumententafeln, Ganghebelblenden und Mittelkonsolenblenden, für Automobil-Außenteile wie Türrammschutzleisten und Abdeckungen an A-, B- und C-Säulen, im Audio- und Video-Bereich für Dekorleisten an Gehäusen von Radio- und Fernsehgeräten, sowie im Telekommunikationsbereich für Gehäuseschalen tragbarer Geräte wie Mobiltelefone oder Navigationsgeräte verwendet.

So offenbart die Patentschrift DE 10 2004 041 868 B3 eine Transferfolie umfassend eine Trägerfolie mit einer ersten Seite und einer zweiten Seite, wobei auf der ersten Seite der Trägerfolie eine Ablöseschicht und auf der der Trägerfolie abgewandten Seite der Ablöseschicht eine Übertragungslage angeordnet ist und wobei auf der zweiten Seite der Trägerfolie, partiell eine Strukturschicht aus einem Strukturierungslack angeordnet ist. Die Reliefstruktur der Strukturschicht drückt sich bei den beim Spritzguss oder Heißprägen vorhandenen hohen Drücken durch die Trägerfolie hindurch auf die Übertragungslage durch. Der Einsatz einer solchen Transferfotie zum Inmould-Spritzgießen ermöglicht die Ausbildung räumlicher Strukturen im Bereich der Übertragungslage auf einem mit einer solchen dekorierten Kunststoffartikel, wobei am Kunststoffartikel und der damit verbundenen Übertragungslage, je nach Anordnung der Strukturschicht, ein räumliches Positiv- oder Negativbild der Strukturschicht erzeugbar ist.

Die WPI-Zusammenfassung 2007-004296 zur JP 2006 305 898 A offenbart ebenfalls einen Mehrschichtkörper zur Herstellung von dekorierten, ein Oberflächenrelief aufweisenden Kunststoffartikeln sowie die Verwendung eines solchen Mehrschichtkörpers in einem Spritzgussverfahren.

Es ist nun Aufgabe der Erfindung, einen verbesserten Mehrschichtkörper zur Herstellung eines dekorierten, ein Oberflächenrelief aufweisenden Kunststoffartikels bereitzustellen, der eine schnellere und damit kostengünstigere Produktion von Spritzgussartikeln ermöglicht und gleichzeitig flexibler und somit für Tiefziehprozesse mit hohen Anforderungen an die Verdehnbarkeit besser geeignet ist als die bislang bekannten Foliensysteme. Darüber hinaus soll ein Verfahren zur Herstellung eines solchen verbesserten Mehrschichtkörpers angegeben werden. Weiterhin sollen zwei kostengünstige Verfahren zur Herstellung eines dekorierten, ein Oberflächenrelief aufweisenden Kunststoffartikels bereitgestellt werden, die unter Verwendung der erfindungsgemäßen Mehrschichtkörpers eine schnellere und kostengünstigere Produktion von Kunststoffartikeln ermöglichen.

Die Aufgabe wird für den Mehrschichtkörper zur Herstellung eines dekorierten, ein Oberflächenrelief aufweisenden Kunststoffartikels dadurch gelöst, dass der Mehrschichtkörper eine Relieffolie mit einer ersten Trägerfolie und einer auf einer Seite der ersten Trägerfolie angeordneten Strukturschicht und eine Mehrschichtfolle mit einer zweiten Trägerfolie und mindestens einer Dekorschicht umfasst, wobei die Strukturschicht zwischen der ersten Trägerfolie und der zweiten Trägerfolie angeordnet ist, der Mehrschichtkörper einen die Relieffolie umfassenden Folienköper, der von der mindestens einen Dekorschicht ablösbar ist, aufweist, und die mindestens eine Dekorschicht durch die als eine Prägestruktur ausgebildete Strukturschicht verformbar ist.

Der erfindungsgemäße Mehrschichtkörper besteht aus einer Übertragungslage und einem davon ablösbaren, die Relieffolie umfassenden Folienkörper. Die die mindestens eine Dekorschicht umfassende Übertragungslage verbindet sich mit einer Spritzmasse oder einem Substrat. Der Folienkörper wird, nachdem eine Verbindung der Übertragungslage mit der Spritzmasse oder dem Substrat hergestellt wurde, von der Übertragungslage abgelöst. Dies ist möglich, da die Haftung der Übertragungslage auf der Spritzmasse bzw. dem Substrat größer ist als die Haftung des Folienkörpers auf der Übertragungslage. Die sich durch die Ablösung des Folienkörpers von der Übertragungslage bildende freie Oberfläche der mit der Spritzmasse oder dem Substrat verbundenen Übertragungslage weist ein freies Oberflächenrelief auf, das während der Herstellung der Verbindung zwischen der Übertragungslage und der Spritzmasse bzw. dem Substrat mittels der als eine Prägestruktur ausgebildeten Strukturschicht in die Übertragungslage eingeprägt wurde.

Wird ein derartiger Mehrschichtkörper zur Herstellung eines dekorierten, ein Oberflächenrelief aufweisenden Kunststoffartikels eingesetzt, insbesondere in einem IMD-, IM- oder IML-Verfahren oder beim Heißprägen, kommt die Strukturschicht aufgrund ihrer Anordnung zwischen der ersten Trägerfolie und der zweiten Trägerfolie mit keiner Werkzeugoberfläche in Kontakt (IM = Insert Moulding; IML = Inmould Labeling). Auf diese Weise wird eine eventuelle Verunreinigung der Werkzeugoberfläche durch die Strukturschicht ausgeschlossen. Der erfindungsgemäße Mehrschichtkörper vermeidet also dauerhaft das bei herkömmlichen Mehrschichtkörpern auftretende Problem, dass sich derartige Verunreinigungen über eine Vielzahl von Produktionszyklen auf der Werkzeugoberfläche akkumulieren und in Folge dessen auf den dekorierten Kunststoffartikeln unerwünschte Oberflächeneffekte wie z.B. Reliefstrukturen ausbilden. Dieser nachteilige Effekt bei herkömmlichen Mehrschichtkörpern tritt in besonderem Maße bei aufgedruckten Strukturschichten auf, beispielsweise unter Verwendung von Strukturlack.

Die Aufgabe wird für ein Verfahren zur Herstellung eines erfindungsgemäßen Mehrschichtkörpers mit folgenden Schritte gelöst: a) Bereitstellen einer Relieffolie mit einer ersten Trägerfolie und einer auf einer Seite der ersten Trägerfolie angeordneten Strukturschicht; b) Bereitstellen einer Mehrschichtfolie mit einer zweiten Trägerfolie und mindestens einer Dekorschicht; und c) Verbinden der Relieffolie und der Mehrschichtfolie so, dass die Strukturschicht zwischen der ersten Trägerfolie und der zweiten Trägerfolie angeordnet ist.

Es hat sich bewährt, den erfindungsgemäßen Mehrschichtkörper als ein zweiteiliges Folienpaket bereitzustellen, ausgebildet aus zwei separaten Folien mit je einer oder mehr Trägerfolien. Dabei ist ein erster Teil des Folienpakets eine herkömmliche Inmould-fähige Mehrschichtfolie und der zweite Teil eine Relieffolie, d.h. eine Folie mit der Strukturschicht. Beide Teile werden mit herkömmlichen Techniken auf einfache und schnelle Weise so miteinander zu dem Folienpaket verbunden, dass die Trägerfolie der Relieffolie an der Werkzeugoberfläche anliegt und die Strukturschicht der Relieffolie von der Werkzeugoberfläche abgewandt ist. Unter einer "Inmould-fähigen" Folie ist eine Folie zu verstehen, die in einem IMD-, IM- oder IML-Verfahren als Dekorfolie zur Dekoration eines Spritzgusskörpers geeignet ist. Eine Dekorfolie ist eine Folie, die mindestens eine Dekorschicht aufweist.

Dadurch ergibt sich eine hohe Flexibilität in Bezug auf die Wahl der in dem Mehrschichtkörper verwendeten Materialien und Aushärteverfahren, was von erheblichem Vorteil ist. So können die Mehrschichtfolie und die Relieffolie jeweils noch nicht oder zumindest noch nicht vollständig ausgehärtete Schichten oder Schichtbereiche beinhalten, die unabhängig voneinander aus- oder nachgehärtet werden können. Das erfindungsgemäße Verfahren zur Herstellung des Mehrschichtkörpers erlaubt es, die Strukturschicht der Relieffolie und die mindestens eine Dekorschicht der Mehrschichtfolie unabhängig voneinander, insbesondere zu unterschiedlichen Zeitpunkten, zu behandeln. Es ist möglich, zu einem Zeitpunkt, bevor die Mehrschichtfolie und die Relieffolie verbunden werden, die Strukturschicht vollständig auszuhärten und die mindestens eine Dekorschicht nicht auszuhärten oder lediglich vorzuhärten. Dabei ist es bevorzugt, die mindestens eine Dekorschicht erst dann vollständig auszuhärten, wenn sie als Dekor auf dem dekorierten, ein Oberflächenrelief aufweisenden Kunststoffartikel angeordnet ist. Diese Flexibilität ist bei herkömmlichen IMD-Folien, bei denen die Reliefstruktur auf der IMD-Folie aufgebracht ist, nicht gegeben. Da bei herkömmlichen IMD-Folien die Reliefstruktur direkt auf der IMD-Folie angeordnet ist, wird das Dekor zwangsläufig gleichzeitig mit der vollständigen Aushärtung der Reliefstruktur ebenfalls vollständig ausgehärtet. Ein vom Aushärtevorgang der Strukturschicht unabhängiges Nachhärten (= Post-Curing) des Dekors, wie es bei dem erfindungsgemäßen Verfahren möglich ist, ist also bei herkömmlichen Foliensystemen nicht möglich.

Die zumindest noch nicht vollständig ausgehärtete Schicht wird auch als auszuhärtende Schicht bezeichnet. Als "noch nicht vollständig ausgehärtet" im Sinne der vorliegenden Erfindung wird eine Schicht dann bezeichnet, wenn ihre Härte und/oder Beständigkeit noch nicht einen festgelegten Mindestwert aufweist. In der Regel ist der festgelegte Mindestwert der Härte und/oder der Beständigkeit eine Funktion des endgültigen Verwendungszwecks der Schicht, z.B. als eine Schutzlackschicht oder als eine Zwischenschicht zur Ausbildung eines optischen Effekts. Mit "vollständig ausgehärtet" im Sinne der vorliegenden Beschreibung wird folglich eine Schicht dann bezeichnet, wenn ihre Härte und/oder Beständigkeit einen festgelegten Mindestwert aufweist.

Es ist möglich, dass die oben genannten Mindestwerte so festgelegt sind, dass eine Schicht dann als "noch nicht vollständig ausgehärtet" im Sinne der vorliegenden Erfindung bezeichnet wird, wenn nicht mehr als 95 % der zu einer Vernetzung fähigen Polymerbestandteile der Schicht eine Vernetzung aufweisen.

Folglich wird eine Schicht dann als "vollständig ausgehärtet" im Sinne der vorliegenden Erfindung bezeichnet, wenn die zu einer Vernetzung fähigen Polymerbestandteile der Schicht zu mehr als 95 % eine Vernetzung aufweisen. Eine vollständig ausgehärtete Schicht liegt dann vor, wenn eine vollständige, d.h. > 95%, Vernetzung seiner Polymerbestandteile erfolgt ist.

Ein weiterer Vorteil des erfindungsgemäßen Verfahrens zur Herstellung des Mehrschichtkörpers ist die Möglichkeit, die Relieffolie und die Mehrschichtfolie in beliebiger relativer Anordnung zueinander zu verbinden. Dies erlaubt es insbesondere, die Strukturschicht und die mindestens eine Dekorschicht im genauen Register aufeinander anzuordnen und zu verbinden. Es ist daher eine präzise Abstimmung der haptischen Struktur auf das Dekor möglich.

Die Aufgabe wird für ein erstes Verfahren zur Herstellung eines dekorierten, ein Oberflächenrelief aufweisenden Spritzgussartikels mit folgenden Schritte gelöst: A) Anordnen eines erfindungsgemäßen Mehrschichtkörpers in einer Spritzgussform derart, dass die erste Trägerfolie an einer Innenwandung der Spritzgussform anliegt; B) Hinterspritzen des Mehrschichtkörpers mit einer Kunststoffspritzmasse derart, dass die Strukturschicht einer oder mehreren der mindestens einen Dekorschicht ein Relief aufprägt; C) Aushärten der Kunststoffspritzmasse zu einem Kunststoffmaterial; D) Entfernen des ausgehärteten Kunststoffmaterials einschließlich des darauf angeordneten Mehrschichtkörpers aus der Spritzgussform; und E) Abziehen eines Folienkörpers umfassend die Relieffolie von dem Kunststoffmaterial und der damit fest verbundenen mindestens einen Dekorschicht, wobei das Kunststoffmaterial und die damit fest verbundene mindestens eine Dekorschicht den dekorierten, ein Oberflächenrelief aufweisenden Spritzgussartikel bereitstellen.

Dieses erste Verfahren zur Herstellung eines dekorierten, ein Oberflächenrelief aufweisenden Spritzgussartikels verwendet den erfindungsgemäßen Mehrschichtkörper; es entspricht daher einer Verwendung des erfindungsgemäßen Mehrschichtkörpers zur Herstellung eines dekorierten, ein Oberflächenrelief aufweisenden Spritzgussartikels.

Die Aufgabe wird für ein zweites Verfahren zur Herstellung eines dekorierten, ein Oberflächenrelief aufweisenden Kunststoffartikels mittels Heißprägen mit folgenden Schritte gelöst: α) Anordnen eines erfindungsgemäßen Mehrschichtkörpers auf einem Substrat derart, dass die Relieffolie dem Substrat abgewandt ist; β) Heißprägen des Mehrschichtkörpers auf das Substrat; und γ) Abziehen eines Folienkörpers umfassend die Relieffolie von dem Substrat und der damit fest verbundenen mindestens einen Dekorschicht, wobei das Substrat und die damit fest verbundene mindestens eine Dekorschicht den dekorierten, ein Oberflächenrelief aufweisenden Kunststoffartikel bereitstellen. Das Substrat kann dabei ein Kunststoffkörper oder eine Unterlage aus Papier, Pappe oder anderem faserigen Material wie Textil sein. Für den Schritt β) wird ein Prägewerkzeug wie eine Walze oder ein Stempel verwendet, dessen Oberfläche vorzugsweise aus Metall oder Silikon besteht.

Dieses zweite Verfahren zur Herstellung eines dekorierten, ein Oberflächenrelief aufweisenden Kunststoffartikels mittels Heißprägen verwendet den erfindungsgemäßen Mehrschichtkörper; es entspricht daher einer Verwendung des erfindungsgemäßen Mehrschichtkörpers zur Herstellung eines dekorierten, ein Oberflächenrelief aufweisenden Kunststoffartikels.

Bei diesem zweiten Verfahren wie auch bei dem oben beschriebenen ersten Verfahren kommt die das Oberflächenrelief ausprägende Strukturschicht mit der Oberfläche des Prägewerkzeugs nicht in Berührung, wodurch eine unerwünschte Verunreinigung der Oberfläche des Prägewerkzeugs vermieden wird. Dabei kann die Oberfläche des Prägewerkzeugs als eine Innenwandung einer Spritzgussform oder eine Oberfläche einer Heißprägewalze oder eines Heißprägestempels ausgebildet sein. Die Vermeidung einer unerwünschte Verunreinigung der Oberfläche des Prägewerkzeugs ist besonders vorteilhaft, wenn diese Oberfläche eine hohe Temperatur, abhängig von Material und Verfahren, vorzugsweise im Bereich von größer als 70°C, aufweist, wie insbesondere bei einer beheizten Prägewalze oder einem beheizten Prägestempel, da eine Entfernung von Verunreinigungen in diesem Fall sehr aufwändig ist.

Beide Verfahren sind dadurch charakterisiert, dass zur Ausbildung des Oberflächenreliefs des Kunststoffkörpers, d.h. des Spritzgussartikels oder Kunststoffartikels, umfassend ein Kunststoffmaterial und eine darauf angeordnete verformbare Schichtenlage, in die verformbare Schichtenlage mittels einer Prägestruktur ein Relief eingeprägt wird, wobei der Präge- oder Strukturierungsvorgang gleichzeitig mit dem Verbinden des Kunststoffmaterials und der verformbaren Schichtenlage stattfindet. Das erfindungsgemäße Oberflächenrelief wird also nicht durch ein Anordnen eines bereits in strukturierter Form, z.B. als Reliefform, vorliegenden Elements, z.B. einer als Teil einer Übertragungslage ausgebildeten Strukturschicht, auf das Kunststoffmaterial ausgebildet, wobei der Strukturierungsvorgang des Elements und das Verbinden des Kunststoffmaterials und des strukturierten Elements zwei separate Verfahrensschritte sind, sondern durch ein in die verformbare Schichtenlage eingeprägtes Relief. Gemäß der vorliegenden Erfindung ist die Prägestruktur kein vorzugsweise metallisches Prägewerkzeug wie z.B. ein Prägestempel oder eine Replizierwalze, sondern eine Strukturschicht einer Relieffolie.

Die auf dem Kunststoffmaterial angeordnete verformbare Schichtenlage ist vorzugsweise durch die Übertragungslage des Mehrschichtkörpers ausgebildet. Die als eine Prägestruktur ausgebildete Strukturschicht weist ein Relief auf, das in die verformbare Schichtenlage eingeprägt wird. Das Relief weist erhöhte Bereiche, d.h. Berge, und zwischen diesen erhöhten Bereichen vertiefte Bereiche, d.h. Täler, auf.

Es ist bevorzugt, wenn der Mehrschichtkörper eine Ablöseschicht aufweist, mittels welcher der Folienkörper von der Übertragungslage, und damit von der mindestens einen Dekorschicht, ablösbar ist. Die Ablöseschicht unterteilt den Mehrschichtkörper in die Übertragungslage und den davon ablösbaren Folienkörper. Es ist bevorzugt, wenn die Ablöseschicht einen Teil des ablösbaren Folienkörper bildet, d.h. beim Ablösen des Folienkörpers von der Übertragungslage entfernt wird. Dabei ist es möglich, dass die Ablöseschicht als eine separate Schicht, insbesondere eine Wachsschicht, ausgebildet ist. Ebenso ist es möglich, dass eine Oberfläche des Folienkörpers die Ablöseschicht bildet, insbesondere durch eine geeignete Materialpaarung der aneinander angrenzenden Schichten des Folienkörpers und der Übertragungslage.

Es hat sich bewährt, wenn die erste Trägerfolie (auch als "Trägerfilm" bezeichnet) eine Polyesterfolie ist. Der Trägerfilm kann aus jedem beliebigen Material sein, z.B. ABS (=Acrylnitril-Butadien-Styrol), PEN (= Polyethylennaphthalat), PC (= Polycarbonat), PMMA (= Polymethylmethacrylat), bevorzugt jedoch aus PET (= Polyethylenterephthalat). Es hat sich außerdem bewährt, wenn die erste Trägerfolie eine Dicke im Bereich von 12 bis 50 µm aufweist, bevorzugt im Bereich von 16 bis 23 µm.

Es hat sich bewährt, wenn die zweite Trägerfolie (auch als "Trägefilm" bezeichnet) eine Polyesterfolie oder eine ABS-Folie ist. Der Trägerfilm kann aus jedem beliebigen Material sein, z.B. PEN oder PC oder PMMA, bevorzugt jedoch aus PET oder ABS. Es ist bevorzugt, wenn die zweite Trägerfolie transparent ist.

Es ist möglich, dass die Mehrschichtfolie als eine Transferfolie ausgebildet ist, die in der folgenden Reihenfolge an die Strukturschicht anschließend die zweite Trägerfolie, eine Ablöseschicht und die mindestens eine Dekorschicht aufweist. Dabei kann es von Vorteil sein, wenn die Transferfolie auf der von der Ablöseschicht abgekehrten Seite der mindestens einen Dekorschicht eine Grundierungsschicht aufweist. Eine derartige Mehrschichtfolie kann in einem IMD-Verfahren zum Einsatz kommen. In diesem Fall ist die zweite Trägerfolie bevorzugt als eine Polyesterfolie ausgebildet. Es hat sich bewährt, wenn die als Polyesterfolie ausgebildete zweite Trägerfolie eine Dicke im Bereich von 12 bis 50 µm aufweist, bevorzugt im Bereich von 16 bis 23 µm.

Es ist möglich, dass die Mehrschichtfolie als eine Transferfolie ausgebildet ist, die in der folgenden Reihenfolge an die Strukturschicht anschließend die zweite Trägerfolie, eine Ablöseschicht, eine erste Dekorschicht, eine Zwischenlackschicht, eine oder mehrere zweite Dekorschichten und eine Grundierungsschicht aufweist. Die erste Dekorschicht kann als ein chemisch und/oder physikalisch vernetztes Lacksystem, d.h. ein vor- und nachhärtbarer Lack (Pre-Curing und Post-Curing), mit einer Dicke im Bereich von 5 bis 20 µm, vorzugsweise im Bereich von 5 bis 10 µm ausgebildet sein. Die Zwischenlackschicht kann als eine Lackschicht mit einer Dicke im Bereich von 0,5 bis 4 µm, vorzugsweise im Bereich von 0,8 bis 1,2 µm ausgebildet sein. Die eine oder mehr zweiten Dekorschichten können als bis zu acht Dekorlackschichten, vorzugsweise zwei bis acht Dekorlackschichten, jeweils mit einer Dicke im Bereich von 0,5 bis 4 µm, vorzugsweise im Bereich von 0,8 bis 1,2 µm ausgebildet sein. Für das gesamte Dekorschichtpaket der einen oder mehreren zweiten Dekorschichten ergibt sich also eine maximale Dicke im Bereich von 0,5 bis 32 µm. Die Grundierungsschicht kann als eine Grundierung und/oder Klebeschicht mit einer Dicke pro Schicht im Bereich von 0,5 bis 4 µm, vorzugsweise im Bereich von 0,8 bis 1,2 µm ausgebildet sein.

Es ist auch möglich, dass die Mehrschichtfolie als eine IM-fähige Folie ausgebildet ist, die in der folgenden Reihenfolge an die Strukturschicht anschließend die mindestens eine Dekorschicht und die zweite Trägerfolie umfasst. Eine derartige Mehrschichtfolie kann in einem IM- oder IML-Verfahren zum Einsatz kommen. In diesem Fall ist die zweite Trägerfolie bevorzugt als eine ABS-Folie ausgebildet. Es hat sich bewährt, wenn die als ABS-Folie ausgebildete zweite Trägerfolie eine Dicke im Bereich von 200 bis 750 µm aufweist. Vor dem Hinterspritzen kann eine derartige Mehrschichtfolie insbesondere mittels Vakuumformung entsprechend der Form des Spritzgussteils vorgeformt werden.

Es hat sich bewährt, wenn die Strukturschicht ein mittels Strahlung, vorzugsweise elektromagnetische Strahlung oder Teilchenstrahlung, härtbares Material aufweist oder aus einem solchen Material ausgebildet ist. Die Strukturschicht kann aber auch aus einem thermisch härtenden Material hergestellt sein. Die Strukturschicht kann aus einem Strukturlack, auch als Strukturierungslack bezeichnet, hergestellt sein, der thermisch oder UV-härtend/vernetzend/trocknend ist. Es ist möglich, dass die Strukturschicht in einfacher und kostengünstiger Weise in der geforderten Schichtdicke auf die erste Trägerfolie aufgedruckt wird. Als Druckverfahren kann ein Tiefdruck oder Siebdruck zur Anwendung kommen.

Besonders bewährt hat es sich, wenn der Strukturierungslack einen Duroplasten oder einen Thermoplasten mit einer Glasübergangstemperatur T_{g} oberhalb von 200°C aufweist. Aber auch der Einsatz eines Strukturierungslacks aus einem mit einem Füllstoff gefüllten, nicht vernetzenden Lacksystem, wobei der Füllstoff bevorzugt aus anorganischen Füllstoffen wie beispielsweise Titandioxid gebildet ist, hat sich bewährt. Derartige Strukturierungslacke sind bis zu hohen Temperaturen formstabil und druckfest, so dass eine Deformation der Strukturschicht unter Spritzguss- oder Heißprägebedingungen nicht oder nur in äußerst geringem Maße erfolgt. Hier hat sich insbesondere bewährt, wenn der Strukturierungslack ein strahlungshärtbarer, ein ESH-härtbarer, ein Epoxyhärtbarer, ein Isocyanat-härtbarer oder säurehärtbarer Lack ist (ESH = Elektronenstrahlhärtung). Derartige vernetzende Lacke weisen die geforderte Form- und Druckstabilität bei hohen Verarbeitungstemperaturen auf und sind auch bei hohem Festkörpergehalt gut verarbeitbar. Besonders bevorzugt ist es dabei, wenn der Strukturierungslack einen Festkörpergehalt von mindestens 40 %, vorzugsweise von 100 %, aufweist. Der hohe Festkörpergehalt erhöht die erzielbare Schichtdicke der Strukturschicht und verbessert die Transkriptionsfähigkeit der Strukturschicht. Somit wird die erzielbare Tiefe der räumlichen Strukturen erhöht.

Die Strukturschicht ist vorzugsweise mittels eines UV-härtbaren Lacks hergestellt (UV = Ultraviolett-Strahlung). Es ist besonders bevorzugt, wenn die Strukturschicht als eine Lackschicht aus einem UV-härtbaren Lack in einem Siebdruckverfahren auf die erste Trägerfolie aufgedruckt wird, weil bei einem solchen Lack eine besonders präzise ausgebildete Struktur ohne Verlaufen oder Verschwimmen des Lackes möglich ist, d.h. die nass gedruckte Struktur im wesentlichen der ausgehärteten Struktur entspricht, und das Siebdruckverfahren das Aufbringen einer Struktur mit besonders hohe Schichtdicken, insbesondere im Bereich von 5 bis 150 µm, ermöglicht. Bei anders, z.B. thermisch, aushärtenden Lacken, insbesondere bei Lösemittel enthaltenden Lacken, kann ein Ausgasen beim Härten/Trocknen zu Formveränderungen in der Reliefstruktur führen, so dass die nass gedruckte Struktur nicht im Wesentlichen der ausgehärteten Struktur entspricht.

Für die erzeugbare Tiefe der räumlichen Strukturierung, d.h. des Oberflächenreliefs, ist für die erfindungsgemäßen Verfahren generell die Strukturtiefe der Strukturschicht maßgebend. Selbstverständlich kann die Dicke der Strukturschicht auf der ersten Trägerfolie dabei unterschiedlich ausgebildet werden, so dass gleichzeitig räumliche Strukturen unterschiedlicher Tiefe erzeugt werden können.

Es ist bevorzugt, wenn die Strukturschicht des Mehrschichtkörpers vollständig ausgehärtet ist. Dies ist besonders einfach zu erreichen, wenn die Strukturschicht einen strahlungshärtbaren Lack aufweist. Weiterhin ist es bevorzugt, wenn die mindestens eine Dekorschicht des Mehrschichtkörpers nicht vollständig ausgehärtet ist. Dies ist besonders einfach zu erreichen, wenn die mindestens eine Dekorschicht einen strahlungshärtbaren Lack aufweist. Es hat sich bewährt, dass die Strukturschicht des Mehrschichtkörpers vollständig ausgehärtet ist und die mindestens eine Dekorschicht des Mehrschichtkörpers nicht vollständig ausgehärtet ist. Dazu wird vor dem Verbinden der Relieffolie und der Mehrschichtfolie die Strukturschicht vollständig ausgehärtet, damit sich deren Reliefstruktur während des Hinterspritzens oder Heißprägens nicht verändert und so in einer oder mehreren der mindestens einen Dekorschicht das gewünschte Oberflächenrelief ausgeprägt wird. Dabei ist, im Gegensatz zu der Strukturschicht, während des Hinterspritzens oder Heißprägens die mindestens eine Dekorschicht noch nicht vollständig ausgehärtet, damit sie gut verformbar bleibt und sich darin das Relief der Strukturschicht einprägen kann. Die gute Verformbarkeit der mindestens einen Dekorschicht ist auch für Verformprozesse, z.B. Vakuumverformung oder Tiefziehen, des Mehrschichtkörpers, die, z.B. bei einem IM- oder IML-Verfahren, vor dem Hinterspritzen oder Heißprägen stattfinden, vorteilhaft.

Es ist auch möglich, dass die Strukturschicht als eine partiell ausgebildete Metallschicht, z.B. aus Aluminium, Kupfer, Silber oder Gold, auf der ersten Trägerfolie vorliegt, die mittels bekannter Metallbeschichtungs- und Strukturierungsverfahren, z.B. ein Demetallisierungsverfahren unter Verwendung eines Positiv- oder Negativ-Photoresists als Ätzresist und Ätzen mittels Ätzmittel, hergestellt wurde.

Es ist auch möglich, dass die Strukturschicht eine Replizierschicht ist, beispielsweise eine Replizierlackschicht, in die makroskopische und/oder mikroskopische Reliefstrukturen eingeprägt sind. Dazu kann auf die erste Trägerfolie eine strahlungshärtbare oder thermisch härtbare Replizierlackschicht aufgebracht werden, ein Relief in die Replizierlackschicht abgeformt werden und die Replizierlackschicht ausgehärtet werden. Die ausgehärtete Replizierlackschicht mit dem darin eingeprägten Relief bildet die Strukturschicht. Das mittels eines Prägestempels in die Replizierlackschicht abgeformte Relief bildet auf diese Weise nach der Aushärtung des Replizierlacks einen Prägestempel, mit dem wiederum der Mehrschichtfolie ein Relief aufgeprägt werden kann.

Vorzugsweise ist die Strukturschicht aus einem Material, insbesondere einem Strukturierungslack, gebildet, dessen Druckfestigkeit mindestens bis zu einer Temperatur von 200°C im wesentlichen konstant ist. Auf diese Weise ist die Formstabilität der Prägestruktur der Strukturschicht im Wesentlichen gewährleistet. Wird eine derartige Strukturschicht in einem Spritzgussverfahren oder beim Heißprägen eingesetzt, wird die Strukturschicht nicht beziehungsweise nur unwesentlich verformt, weil Kunststoffspritzgussmassen üblicherweise bei Temperaturen unterhalb von 200 bis 300°C in Werkzeugen mit einer Temperatur von etwa 30 bis 70°C verspritzt werden und ein Heißprägen üblicherweise ebenfalls unterhalb von 230°C erfolgt.

Die Strukturschicht ist als eine Prägestruktur ausgebildet, die erhöhte und vertiefte Bereiche aufweist. Es ist bevorzugt, wenn die vertieften Bereiche der Prägestruktur als Hohlräume ausgebildet sind und/oder ein Material, insbesondere einen Klebstoff, aufweisen, das weicher, d.h. kompressibter, als die Strukturen der Strukturschicht ist. Vorzugsweise ist ein Hohlraum durch folgende den Hohlraum umschließende Flächen a) bis c) gebildet: a) entweder vertiefte Bereiche der Strukturschicht oder eine andere Schicht (z.B. eine Klebeschicht), die zwischen dem Hohlraum und der ersten Trägerfolie angeordnet ist, oder die erste Trägerfolie selbst; b) benachbarte erhöhte Bereiche der Strukturschicht; c) entweder die zweite Trägerfolie selbst oder eine Schicht (z.B. eine Klebeschicht), die zwischen dem Hohlraum und der zweiten Trägerfolie angeordnet ist.

Die Hohlräume können mit einem Gas, z.B. Luft oder Kohlendioxid, gefüllt oder evakuiert sein. Die Hohlräume können teilweise oder vollständig mit ein oder mehreren festen oder flüssigen Materialien gefüllt sein. Dabei sind die ein oder mehreren Materialien, die die vertieften Bereiche füllen, so kompressibel, dass bei einer Druckbeaufschlagung des Mehrschichtkörpers während eines Spritzguss- oder Heißprägeverfahrens die Verformung der Mehrschichtfolie in die vertieften Bereiche der Strukturschicht hinein durch diese Materialien nicht wesentlich behindert oder zumindest nicht gänzlich verhindert wird. Es ist möglich, dass ein Hohlraum teils mit einem Klebstoff gefüllt ist und das Restvolumen mit einem kompressiblen Gas gefüllt ist, so dass die Verformung der Mehrschichtfolie in die vertieften Bereiche der Strukturschicht hinein möglich ist. Es ist auch möglich, dass ein Hohlraum vollständig mit einem Klebstoff gefüllt ist, der in dem oben angegebenen Maße kompressibel ist, so dass die Verformung der Mehrschichtfolie in die vertieften Bereiche der Strukturschicht hinein möglich ist.

Es ist bevorzugt, wenn die Mehrschichtfolie ohne eine von der Strukturschicht herrührende Verformung vorliegt. Dabei ist es bevorzugt, wenn bei der Herstellung des Mehrschichtkörpers die Relieffolie und die Mehrschichtfolie verbunden werden, ohne dass die als eine Prägestruktur ausgebildete Strukturschicht ein Relief in eine oder mehrere Schichten der Mehrschichtfolie einprägt.

Es ist bevorzugt, wenn eine Schicht des Mehrschichtkörpers, die auf einer von der ersten Trägerfolie abgekehrten Seite der Strukturschicht unmittelbar an die Strukturschicht angrenzend angeordnet ist, eine konstante Schichtdicke aufweist, insbesondere sowohl in den erhöhten als auch in den vertieften Bereichen der Strukturschicht. Es ist bevorzugt, wenn eine Schicht des Mehrschichtkörpers, die auf einer von der ersten Trägerfolie abgekehrten Seite der Strukturschicht unmittelbar an die Strukturschicht angrenzend angeordnet ist, vor dem Hinterspritzen oder Heißprägen des erfindungsgemäßen Mehrschichtkörper eine vorzugsweise plane Oberflächenkontur aufweist, die von der Reliefstruktur der Strukturschicht unabhängig ist.

Es ist möglich, dass die Strukturschicht eine Dicke im Bereich von 5 bis 250 µm, bevorzugt im Bereich von 10 bis 70 µm, aufweist. Es ist möglich, dass die Strukturschicht eine Strukturtiefe im Bereich von 5 bis 250 µm aufweist. Es ist möglich, dass benachbarte erhöhte Bereiche und/oder benachbarte vertiefte Bereiche der Strukturschicht einen Abstand im Bereich von 1 µm bis 50 cm, bevorzugt im Bereich von 100 µm bis 5 mm aufweisen. Die Parameter der Strukturschicht wie Dicke, Strukturtiefe und Abstand werden je nach gewünschter haptischer Struktur des Oberflächenreliefs gewählt.

Es ist möglich, dass eine Klebeschicht auf die von der ersten Trägerfolie abgekehrten Seite der Strukturschicht aufgebracht wird. Es ist möglich, dass unmittelbar auf der von der ersten Trägerfolie abgekehrten Seite der Strukturschicht eine Klebeschicht angeordnet ist. Es ist bevorzugt, wenn die Klebeschicht eine Dicke im Bereich von 0,5 bis 4 µm, besonders bevorzugt im Bereich von 0,5 bis 2 µm, aufweist. Die Klebeschicht kann dünner, gleich dick oder dicker als die Strukturtiefe der Strukturschicht sein. Vorzugsweise ist der Kleber aber sehr dünn ausgebildet, d.h. dünner als die Strukturtiefe der Strukturschicht.

Es ist möglich, dass als Kleber ein sogenannter Kontaktklebstoff, zum Beispiel auf Basis von Polyurethan (= PUR), dient. Es kann aber auch jeder beliebig geeignete Klebstoff dienen, welcher physikalisch trocknend ist und in der Lage ist, die Relieffolie und die Mehrschichtfolie miteinander zu verkleben. Als Auftragsverfahren zum Auftrag der Klebeschicht kann jedes beliebige Druckverfahren gewählt werden. Es ist möglich, dass die haptischen Strukturen der Strukturschicht durch den Kleber der Klebeschicht überfüllt werden. Die sehr harten Strukturen der Strukturschicht, vorzugsweise aus sehr hartem UVhärtendem Lack, sind in der Lage, sich durch den sehr viel weicheren Kleber hindurch zu drücken.

Es ist möglich, dass eine Klebeschicht auf die der Relieffolie zugekehrte Seite der Mehrschichtfolie aufgebracht wird. Alternativ zu zwei Klebeschichten, je eine auf der Strukturschicht und auf der der Strukturschicht zugekehrten Seite der Mehrschichtfolie, kann auch nur eine Klebeschicht aufgetragen werden, entweder auf der Relieffolie oder auf der Mehrschichtfolie.

Es ist bevorzugt, wenn die von der Strukturschicht abgekehrte Seite der ersten Trägerfolie unbeschichtet ist. Im Falle einer blanken ersten Trägerfolie werden Verunreinigungen der Werkzeugoberfläche, z.B. einer Spritzgussform oder eines Stempels, sicher vermieden. Weiter hat es sich bewährt, wenn der Mehrschichtkörper derart in der Spritzgussform angeordnet wird, dass die erste Trägerfolie unmittelbar an der Innenwandung der Spritzgussform anliegt.

Vorzugsweise wird die Strukturschicht in Form eines regelmäßigen oder unregelmäßigen Musters und/oder in Form von alphanumerischen Zeichen und/oder in Form von bildlichen Darstellungen auf der Trägerfolie ausgebildet. Es ist möglich, dass die Strukturschicht ein Positiv oder ein Negativ für ein Muster, ein alphanumerisches Zeichen oder eine bildliche Darstellung ausbildet. Die Strukturschicht bildet ein Relief, das einer oder mehreren der mindestens einen Dekorschicht aufgeprägt wird. Es ist bevorzugt, wenn eine der einen oder mehreren der mindestens einen Dekorschicht, denen ein Relief aufgeprägt worden ist, eine Oberfläche des fertig dekorierten Kunststoffartikels ausbildet.

Es ist möglich, dass die Strukturschicht ein Relief aufweist, das in Form eines regelmäßigen oder unregelmäßigen Musters und/oder in Form von alphanumerischen Zeichen und/oder in Form von bildlichen Darstellungen auf der Trägerfolie ausgebildet ist. Es ist möglich, dass das Relief der Strukturschicht ein Positiv oder ein Negativ für ein Muster, ein alphanumerisches Zeichen oder eine bildliche Darstellung ausbildet, das bzw. die als ein freies Oberflächenrelief einem Kunststoffartikel eingeprägt wird.

Das für die Strukturschicht gewählte Design wird je nach Anordnung der Strukturschicht und der mindestens einen Dekorschicht ein Positiv oder ein Negativ für das Muster, das alphanumerische Zeichen oder die bildliche Darstellung sein. Wird die erste Trägerfolie inklusive der Strukturschicht entfernt, so verbleibt als Oberflächenrelief, d.h. räumliche Strukturierung, des Kunststoffkörpers ein Negativbild der Strukturschicht, was bedeutet, dass die Bereiche der mindestens einen Dekorschicht, in denen die erste Trägerfolie frei von der Strukturschicht war oder in denen sich vertiefte Bereiche der Strukturschicht befanden, die erhöhten Bereiche des Oberflächenreliefs darstellen, während die Bereiche der mindestens einen Dekorschicht, in welchen eine Strukturschicht vorgesehen war oder in denen sich erhöhte Bereiche der Strukturschicht befanden, die - gegebenenfalls unterschiedlich - vertieften Bereiche des Oberflächenreliefs darstellen.

Es ist möglich, dass die mindestens eine Dekorschicht mindestens eine Schutzschicht und/oder mindestens eine Schicht mit einem dekorativen Effekt umfasst. Der Begriff "Dekorschicht" im Sinne der vorliegenden Erfindung kann eine Schutzschicht oder eine Schicht mit einem dekorativen Effekt bezeichnen.

Es ist möglich, dass die mindestens eine Dekorschicht als eine transparente Schutzschicht, vorzugsweise als ein transparenter Schutzlack oder als eine Klarsichtfolie, ausgebildet ist. Dabei ist es möglich, dass der Teil des Mehrschichtkörpers, der als die Übertragungslage ausgebildet ist, ansonsten keine weiteren Dekorschichten, insbesondere keine weiteren farbigen, opaken, transluzenten oder transparenten Dekorschichten, aufweist. Dabei ist es außerdem möglich, dass ein zu dekorierender Körper, insbesondere ein Substrat, bereits über ein vorhandenes Dekor verfügt und die mindestens eine Dekorschicht, die sich als ein Teil der Übertragungslage mit dem zu dekorierenden Körper verbindet, das vorhandene Dekor des zu dekorierenden Körpers nur um ein Oberflächenrelief ergänzt, d.h. ein zusätzliches, haptisches Dekor bereitstellt. In diesem Fall stellt der Mehrschichtkörper eine transparente Haptikfolie zur Herstellung eines damit dekorierten, ein Oberflächenrelief aufweisenden Kunststoffartikels bereit.

Das auf dem zu dekorierenden Körper bereits vorhandene Dekor kann eine Eigenfarbe des zu dekorierenden Körper sein, z.B. eine Farbe des Materials, aus dem der zu dekorierende Körper besteht. Es ist ebenfalls möglich, dass das auf dem zu dekorierenden Körper bereits vorhandene Dekor vor dem Applizieren der mindestens einen Dekorschicht als flüssiges oder pulverförmiges Material schichtförmig, als herkömmliche Transferfolie oder als Laminierfolie auf dem der zu dekorierenden Körper aufgebracht wird.

Es ist möglich, dass der dekorative Effekt durch eine oder mehrere zumindest partiell angeordnete, gegebenenfalls spiegelnd reflektierende Metallschicht(en) und/oder eine zumindest partiell angeordnete Interferenzschicht und/oder eine zumindest partiell angeordnete Replizierschicht mit Reliefstrukturen wie makroskopischen Reliefstrukturen, diffraktiven Strukturen oder Hologrammen und/oder eine zumindest partiell angeordnete Farbschicht und/oder eine zumindest partiell angeordnete pigmentierte Schicht erzeugt ist, die fluoreszierende, phosphoreszierende, thermochrome oder photochrome Pigmente oder Pigmente mit blickwinkelabhängigen Farbwechseleffekten aufweist. Eine Schutzschicht kann eine transparente oder transluzente oder opake, vorzugsweise gegen äußere mechanische und/oder chemische Einflüsse sehr beständige Lackschicht mit oder ohne Einfärbung sein. Es ist möglich, dass die Strukturschicht im Register zu mindestens einem Dekor mindestens einer der mindestens einen Dekorschicht angeordnet ist. Unter einem Dekor ist jede einen dekorativen Effekt erzeugende Struktur oder jeder einen dekorativen Effekt erzeugende Schichtaufbau zu verstehen. Unter Register ist die lagengenaue Anordnung von übereinanderliegenden Schichten zu verstehen. Die Registerhaltigkeit der Schichten wird vorzugsweise anhand von Passermarken kontrolliert, die auf allen Schichten gleichermaßen vorhanden sind und an denen leicht erkannt werden kann, ob die Schichten im Register angeordnet sind. Die Registergenauigkeit ist in beiden Dimensionen, d.h. Länge und Breite, gegeben.

Es ist möglich, dass zwischen der Strukturschicht und der mindestens einen Dekorschicht eine Ablöseschicht mit einer Dicke im Bereich von 0,01 µm bis 0,5 µm, bevorzugt im Bereich von 0,05 µm bis 0,1 µm, angeordnet ist.

Bei den IM- und IML-Verfahren handelt es sich um kombinierte Verfahren aus Heißprägen, Vakuumformung und Guss, insbesondere Spritzguss. Insert-Moulding bietet gegenüber dem IMD-Verfahren die Möglichkeit, die Folie stärker zu deformieren. Dies ist von Vorteil, wenn z.B. stark profilierte und geformte Teile benötigt werden. Zunächst wird eine Heißprägefolie, umfassend einen Träger und eine darauf angeordnete, vakuumformbare, dünne Übertragungslage, auf eine Trägerfolie, z.B. eine ABS-Folie, vorzugsweise mit einer Dicke etwa zwischen 200 µm und 750 µm, heißgeprägt. In der Regel wird danach der Träger der Heißprägefolie von einem Folienpaket umfassend die Übertragungslage und die Trägerfolie abgezogen. Das Folienpaket wird unter Hitze vakuumgeformt. Die derart vakuumgeformten Lagen des Folienpakets umfassend die Übertragungslage und die Trägerfolie bilden das sogenannte "Insert" und werden konturgenau ausgeschnitten bzw. -gestanzt. Das Insert (auch "Insert Sheet" genannt) wird in einer Spritzgussform positioniert, die Form wird mit Kunststoff gefüllt, d.h. das Insert wird hinterspritzt, dann wird der dekorierte Spritzgussartikel aus der Spritzgussform entnommen. Alternativ zu dem oben geschilderten Verfahren ist es auch möglich, dass nach dem Heißprägen der Träger der Heißprägefolie auf dem Folienpaket umfassend die Übertragungslage und die Trägerfolie belassen und ein IM-Insert bzw. IML-Label aus einem erweiterten Folienpaket umfassend den Träger der Heißprägefolie, die Übertragungslage der Heißprägefolie und die Trägerfolie gebildet wird. Es ist möglich, dass die erfindungsgemäße Mehrschichtfolie durch ein derartiges Insert bzw. Label, umfassend den Träger der Heißprägefolie, die Übertragungslage der Heißprägefolie und die Trägerfolie, ausgebildet ist. Insbesondere in diesem Fall ist es möglich, dass die Mehrschichtfolie eine dritte Trägerfolie umfasst, die vorzugsweise durch den Träger der Heißprägefolie gebildet ist und die zwischen der Strukturschicht und der mindestens einen Dekorschicht angeordnet ist. Ein eine derartige Mehrschichtfolie aufweisender Mehrschichtkörper ist vorzugsweise bei einem IM- oder IML-Verfahren zu verwenden. Es hat sich bewährt, wenn die dritte Trägerfolie eine Polyesterfolie, insbesondere eine tiefziehfähige PET-Folie, ist.

Ein Vorteil des eine dritte Trägerfolie umfassenden Mehrschichtkörpers besteht darin, dass die dritte Trägerfolie eine gegebenenfalls oberflächen-geprüfte Dekorschicht, z.B. eine Schutzlackschicht, vor Kleberrückständen, die von der Klebeschicht der Relieffolie stammen können, schützt. Es hat sich bewährt, wenn sich zwischen der obersten, d.h. der der Relieffolie am nächsten liegenden, Dekorschicht und der dritten Trägerschicht keine Ablöseschicht befindet, sondern Adhäsionskräfte wirken. Wird die Mehrschichtfolie durch ein Insert bzw. Label gebildet, von dem der Träger der Heißprägefolie entfernt worden ist, d.h. bei Fehlen der dritten Trägerlage, und stand die oberste Dekorschicht direkt mit einer Klebeschicht in Kontakt, können nach dem Abziehen des Folienpakets umfassend die Relieffolie von dem dekorierten Kunststoffartikel Kleberrückstände auf der obersten Dekorschicht des Kunststoffartikels nicht ausgeschlossen werden.

Es ist möglich, dass zwischen der dritten Trägerfolie und der mindestens einen Dekorschicht eine Ablöseschicht angeordnet ist.

Es ist möglich, dass die Relieffolie auf die Mehrschichtfolie laminiert oder kaschiert wird. Das Laminieren oder Kaschieren erfolgt in bevorzugter Weise durch Abrollen einer beheizten Walze auf der Relieffolie oder im Hubverfahren mittels eines beheizten Stempels, der die Relieffolie kontaktiert. Es ist möglich, wenn die als ein erstes Einzellaminat ausgebildete Relieffolie und die als ein zweites Einzellaminat ausgebildete Mehrschichtfolie mittels thermischen Kaschierens zu einem Laminat vereinigt werden, wobei die Laminiergeschwindigkeit im Bereich von 2 m/min bis 10 m/min variieren kann, vorzugsweise im Bereich von 3 bis 5 m/min liegt. Je nach angewendetem Kleber können die beiden Einzellaminate bei einer Temperatur im Bereich von 90 bis 150°C zusammenlaminiert werden, vorzugsweise bei einer Temperatur von ca. 120°C. Dabei liegt der Anpressdruck im Bereich von 70 bis 90 bar, vorzugsweise bei ca. 80 bar.

Es ist möglich, dass das Verfahren zur Herstellung eines Mehrschichtkörpers, falls die Strukturschicht des Mehrschichtkörpers einen strahlungshärtbaren Lack aufweist, der ausgehärtet ist, und die mindestens eine Dekorschicht einen strahlungshärtbaren Lack aufweist, der nicht ausgehärtet ist, weiter ein Härten der Strukturschicht umfasst, das vor dem Schritt c) ausgeführt wird.

Bei dem Verfahren zur Herstellung des dekorierten Spritzgussartikels umfasst der Schritt B) vorzugsweise folgende Schritte: Einspritzen der Kunststoffspritzmasse in die Spritzgussform so, dass die Kunststoffspritzmasse mit einer von der Innenwandung der Spritzgussform abgekehrten Seite des Mehrschichtkörpers in Kontakt kommt; Einstellen des Drucks der eingespritzten Kunststoffspritzmasse so, dass die Mehrschichtfolie in Richtung der Innenwandung der Spritzgussform gegen die Relieffolie gedrückt wird; und Aufrechterhalten des Drucks der eingespritzten Kunststoffspritzmasse, bis ein Relief der Strukturschicht in einer vorgegebenen Einprägtiefe in die eine oder mehreren der mindestens einen Dekorschicht eingeprägt ist. Die Strukturschicht hält im Wesentlichen dem Spritzdruck und den Spritztemperaturen stand, so dass die Strukturschicht durch den Druck und die Temperatur der eingespritzten Kunststoffspritzmasse keine oder nur eine sehr geringe Deformation erfährt und als ein Abstandshalter zwischen der Innenwandung der Spritzgussform und der Mehrschichtfolie wirkt. Die Mehrschichtfolie wird in den vertieften Bereichen der Strukturschicht in stärkerem Maße als in den erhöhten Bereichen der Strukturschicht in Richtung der Innenwandung der Spritzgussform verformt. Durch diese Verformung wird in die Mehrschichtfolie und damit auch in eine oder mehrere der mindestens einen Dekorschicht das Relief der Strukturschicht eingeprägt.

Bei einem Verfahren zur Herstellung des dekorierten Spritzgussartikels, insbesondere bei einem IMD-Verfahren, unter Verwendung eines als Transferfolie ausgebildeten Mehrschichtkörpers, dessen Mehrschichtfolie in der folgenden Reihenfolge an die Strukturschicht anschließend die zweite Trägerfolie, eine Ablöseschicht und die mindestens eine Dekorschicht aufweist, hat es sich bewährt, wenn der Folienkörper, der abgezogen wird, die Relieffolie, die zweite Trägerfolie und die Ablöseschicht umfasst.

Bei einem Verfahren zur Herstellung des dekorierten Spritzgussartikels, insbesondere bei einem IM- oder IML-Verfahren, unter Verwendung eines Mehrschichtkörpers, dessen Mehrschichtfolie in der folgenden Reihenfolge an die Strukturschicht anschließend die mindestens eine Dekorschicht und die zweite Trägerfolie umfasst, hat es sich bewährt, wenn der Folienkörper von dem Kunststoffmaterial, der damit fest verbundenen mindestens einen Dekorschicht und der damit fest verbundenen zweiten Trägerfolie abgezogen wird, wobei das Kunststoffmaterial, die damit fest verbundene mindestens eine Dekorschicht und die damit fest verbundene zweite Trägerfolie den dekorierten, ein Oberflächenrelief aufweisenden Spritzgussartikel bereitstellen. Dabei ist es bevorzugt, wenn der Folienkörper, der abgezogen wird, aus der Relieffolie oder aus der Relieffolie und einer Klebeschicht der Mehrschichtfolie besteht.

Bei einem Verfahren zur Herstellung des dekorierten Spritzgussartikels, insbesondere bei einem IM- oder IML-Verfahren, unter Verwendung eines Mehrschichtkörpers, dessen Mehrschichtfolie eine dritte Trägerfolie umfasst, die zwischen der Strukturschicht und der mindestens einen Dekorschicht angeordnet ist, hat es sich bewährt, wenn der Folienkörper, der abgezogen wird, die Relieffolie und die dritte Trägerfolie umfasst und der Folienkörper von dem Kunststoffmaterial, der damit fest verbundenen mindestens einen Dekorschicht und der damit fest verbundenen zweiten Trägerfolie abgezogen wird, wobei das Kunststoffmaterial, die damit fest verbundene mindestens eine Dekorschicht und die damit fest verbundene zweite Trägerfolie den dekorierten, ein Oberflächenrelief aufweisenden Spritzgussartikel bereitstellen.

Es ist möglich, dass das Verfahren zur Herstellung eines dekorierten, ein Oberflächenrelief aufweisenden Spritzgussartikels weiter folgende Schritte umfasst, die vor dem Schritt a) ausgeführt werden: Umformen des Mehrschichtkörpers in eine gewünschte Form durch Anwendung von Wärme und Druck, insbesondere durch Tiefziehen; und Beschneiden des umgeformten Mehrschichtkörpers entlang einer definierten Konturlinie, beispielsweise mittels Stanzen oder Laserschneidens.

Bei dem Verfahren zur Herstellung eines dekorierten, ein Oberflächenrelief aufweisenden Kunststoffartikels mittels Heißprägen umfasst der Schritt β) vorzugsweise folgende Schritte: Beaufschlagen des Mehrschichtkörpers und/oder des Substrats mit Druck so, dass die Relieffolie und das Substrat gegeneinander gedrückt werden; und Einstellen und Aufrechterhalten des Drucks, bis ein Relief der Strukturschicht in einer vorgegebenen Einprägtiefe in eine oder mehrere der mindestens einen Dekorschicht eingeprägt ist. Die Strukturschicht hält im Wesentlichen dem Heißprägedruck und den Heißprägetemperaturen stand, so dass die Strukturschicht durch den Druck und die Temperatur des Heißprägeverfahrens keine oder nur eine sehr geringe Deformation erfährt und als ein Abstandshalter zwischen der ersten Trägerfolie und der Mehrschichtfolie wirkt. Die Mehrschichtfolie wird in den vertieften Bereichen der Strukturschicht in stärkerem Maße als in den erhöhten Bereichen der Strukturschicht in Richtung der ersten Trägerfolie verformt. Durch diese Verformung wird in die Mehrschichtfolie und damit auch in eine oder mehrere der mindestens einen Dekorschicht das Relief der Strukturschicht eingeprägt.

Bei dem Verfahren zur Herstellung eines dekorierten, ein Oberflächenrelief aufweisenden Kunststoffartikels mittels Heißprägen erfolgt das Heißprägen vorzugsweise durch Abrollen beheizter Walzen auf dem Mehrschichtkörper oder im Hubverfahren mittels beheizter Flächen- oder Formstempel. Dadurch wird der Mehrschichtkörpers und/oder das Substrats so mit Druck beaufschlagt, dass die Relieffolie und das Substrat gegeneinander gedrückt werden.

Bei dem Verfahren zur Herstellung eines dekorierten, ein Oberflächenrelief aufweisenden Kunststoffartikels mittels Heißprägen hat es sich bewährt, wenn der Kunststoffkörper als Folienbahn ausgebildet ist.

Bildet der beim Heißprägen eingesetzte Kunststoffartikel eine Folienbahn, so hat es sich bewährt, wenn die mit der mindestens einen Dekorschicht dekorierte Folienbahn mittels Tiefziehen oder Stanzen zu einem Halbzeug weiterverarbeitet wird. Das Halbzeug kann schließlich in eine Spritzgussform eingelegt und zumindest auf einer seiner beiden Seiten mit einer Kunststoffspritzmasse bespritzt werden. Ein derartiges Verfahren wird üblicherweise als Insert-Molding-Verfahren bezeichnet.

Generell hat es sich bewährt, wenn zumindest das in den erfindungsgemäßen Verfahren zur Herstellung eines dekorierten, ein Oberflächenrelief aufweisenden Kunststoffartikels erzeugte Oberflächenrelief in einem nachfolgenden Spritzgussprozess mit einer insbesondere transparenten, vorzugsweise hochglänzenden Kunststoffspritzmasse überspritzt wird, so dass sich spezielle optische Tiefeneffekte ergeben. Die Oberfläche des Kunststoffartikels weist danach jedoch kein fühlbares Oberflächenrelief mehr auf.

Die Figuren 1 bis 10 sollen die Erfindung beispielhaft erläutern. So zeigt jeweils schematisch und nicht maßstabsgetreu:
- Figur 1: ein Herstellungsverfahren eines Mehrschichtkörpers,
- Figuren 2a bis 2c: Verfahrensschritte zur Herstellung eines ersten dekorierten, ein Oberflächenrelief aufweisenden Kunststoffartikels,
- Figuren 3a bis 3c: Verfahrensschritte zur Herstellung eines zweiten dekorierten, ein Oberflächenrelief aufweisenden Kunststoffartikels,
- Figuren 4a bis 4b: Verfahrensschritte zur Herstellung eines weiteren dekorierten, ein Oberflächenrelief aufweisenden Kunststoffartikels,
- Figuren 5a und 5b: unterschiedlich ausgebildete Strukturschichten,
- Figuren 6a bis 6c: Verfahrensschritte zur Herstellung eines weiteren dekorierten, ein Oberflächenrelief aufweisenden Kunststoffartikels ähnlich den in Fig. 2a bis 2c dargestellten Verfahrensschritten,
- Figur 7: einen Verfahrensschritt zur Herstellung eines weiteren dekorierten, ein Oberflächenrelief aufweisenden Kunststoffartikels ähnlich dem in Fig. 3a dargestellten Verfahrensschritt,
- Figur 8: einen Verfahrensschritt zur Herstellung eines weiteren dekorierten, ein Oberflächenrelief aufweisenden Kunststoffartikels ähnlich dem in Fig. 4a dargestellten Verfahrensschritt,
- Figur 9: einen Verfahrensschritt zur Herstellung eines weiteren dekorierten, ein Oberflächenrelief aufweisenden Kunststoffartikels, und
- Fig. 10: einen Schnitt einer Oberfläche eines dekorierten, ein Oberflächenrelief aufweisenden Kunststoffartikels.

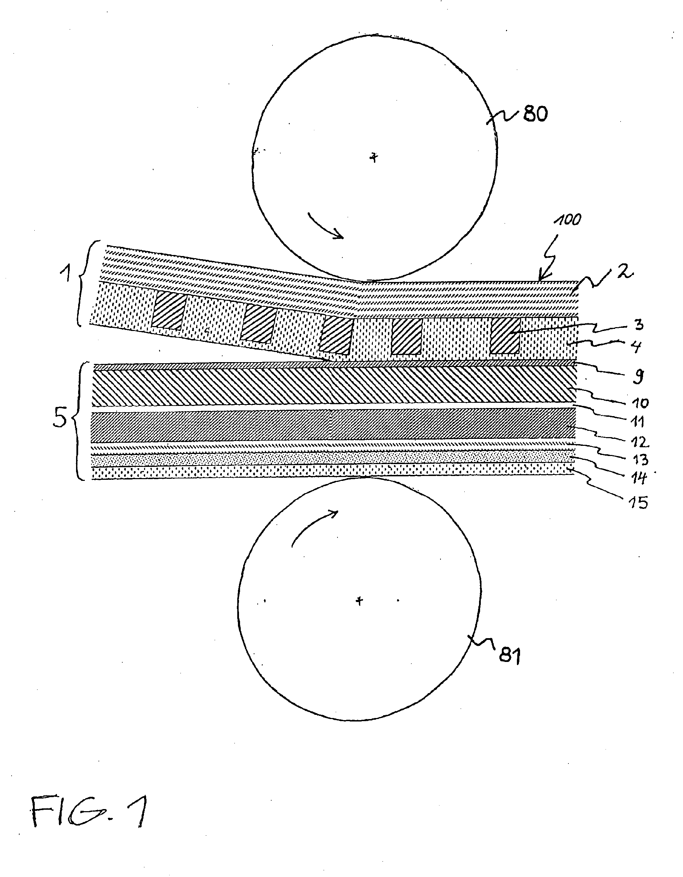

Figur 1 zeigt ein Verfahren zur Herstellung eines Mehrschichtkörpers 100. Dazu wird eine Relieffolie 1 bereitgestellt, die eine erste Trägerfolie 2 und eine auf einer Seite der ersten Trägerfolie 2 angeordnete Strukturschicht 3 aufweist. Im vorliegenden Ausführungsbeispiel ist die Strukturschicht 3 als eine mittels Siebdruck auf die erste Trägerfolie 2 aufgedruckte Lackschicht ausgebildet. Daher weist die erste Trägerfolie 2 von der Strukturschicht 3 bedeckte und weitestgehend unbedeckte Bereich auf; die Strukturschicht 3 ist also bereichsweise, d.h. partiell, ausgebildet. Außerdem weist die Relieffolie 1 eine Klebeschicht 4 auf, die auf der partiell angeordneten Strukturschicht 3 aufgebracht ist und welche die Strukturschicht 3 auf ihrer von der Trägerfolie 2 abgekehrten Seite überdeckt. Die erste Trägerfolie 2 der Relieffolie 1 weist eine Dicke im Bereich von 12 bis 50 µm auf, vorzugsweise im Bereich von 16 bis 23 µm. In dieser wie auch in den anderen Figuren sind die dargestellten Vorrichtungen nicht maßstäblich dargestellt.

Die erste Trägerfolie 2 ist eine PET-Folie. Die Strukturschicht 3, die partiell auf der ersten Trägerfolie 2 angeordnet ist, weist eine Schichtdicke im Bereich von 5 bis 250 µm, vorzugsweise im Bereich von 10 bis 70 µm, aus. Die Strukturschicht 3 ist aus einem UV-härtbaren Lack hergestellt. Vor dem Zusammenlaminieren der Relieffolie 1 und der Mehrschichtfolie 5 wird die Strukturschicht 3 der Relieffolie 1 ausgehärtet. Nach dem Aushärten weist der UV-Lack eine hohe Härte auf. Die Klebeschicht 4 der Relieffolie 1 ist in der in Fig. 1 gezeigten Ausführung in einer Schichtdicke aufgetragen, die größer als die Strukturtiefe der Strukturschicht 3 ist. Auf diese Weise ist die Strukturschicht 3 vollständig von der Klebeschicht 4 überdeckt. Die sehr harten Strukturen der Strukturschicht 3 sind in der Lage, sich durch die im Vergleich dazu sehr viel weichere Klebeschicht 4 hindurchzudrücken.

Die Mehrschichtfolie 5 ist als eine übliche IMD-fähige Transferfolie ausgebildet. Die Transferfolie 5 weist eine Klebeschicht 9, eine zweite Trägerfolie 10, eine Ablöseschicht 11, eine als transparente Schutzlackschicht ausgebildete erste Dekorschicht 12, eine Zwischenschicht 13, eine als ein Dekorschichtpaket ausgebildete zweite Dekorschicht 14, sowie eine Grundierungsschicht 15 auf. Die Ablöseschicht 11, die Schutzlackschicht 12, die Zwischenschicht 13, die Dekorschicht 14 sowie die Grundierungsschicht 15 können auf der zweiten Trägerfolie 10 mittels eines Druck- oder Gießverfahrens aufgebracht sein.

Die Klebeschicht 9 der Mehrschichtfolie 5 weist eine Schichtdicke von 0,5 bis 2 µm auf. Die zweite Trägerfolie 10 der Mehrschichtfolie 5 ist eine Polyesterfolie mit einer Schichtdicke im Bereich von 16 bis 23 µm. Die Ablöseschicht 11 weist eine Schichtdicke im Bereich von 0,2 bis 0,5 µm, auf. Die Schutzlackschicht 12 ist als ein vorgehärtetes chemisch und/oder physikalisch vernetztes Lacksystem ausgebildet. Nach einer Vorhärtung/Trocknung der Schutzlackschicht 12 während der Herstellung der Mehrschichtfolie 5 erfolgt eine spätere endgültige Aushärtung der Schutzlackschicht 12 am fertig dekorierten Kunststoffartikel. Beide Trocknungs- bzw. Härtungsschritte können thermisch und/oder strahlungsbasiert sein. Die Schutzlackschicht 12 weist eine Schichtdicke im Bereich von 5 bis 10 µm auf. Die Zwischenschicht 13 ist als eine Zwischenlackschicht ausgebildet, mit einer Schichtdicke im Bereich von 0,8 bis 1,2 µm. Die Dekorschicht 14 umfasst drei Dekorlackschichten, wobei jede Dekorlackschicht eine Schichtdicke im Bereich von 0,8 bis 1,2 µm aufweist. Das gesamte Dekorschichtpaket 14 ist daher maximal 3,6 µm dick. Die Grundierungsschicht 15 ist eine Grundierung, die eine Verbindung der Mehrschichtfolie 5 mit einem hinterspritzten Kunststoffmaterial verbessert, und weist eine Schichtdicke im Bereich von 0,8 bis 1,5 µm auf.

Die Relieffolie 1 und die Mehrschichtfolie 5 werden bereitgestellt und mittels thermischem Kaschieren zu einem Mehrschichtkörper 100 vereinigt, wobei die Laminiergeschwindigkeit 3 bis 5 m pro Minute beträgt. Zum Laminieren wird die Relieffolie 1 so orientiert, dass die erste Trägerfolie der Mehrschichtfolie 5 abgewandt und die Strukturschicht 3 der Mehrschichtfolie 5 zugekehrt ist. Ein Walzenpaar 80, 81 laminiert die beiden Schichtpakete 1, 5 unter Anwendung von Druck und Temperatur zu einem Mehrschichtkörper 100 zusammen. Dabei ist die an der Relieffolie 1 anliegende Walze 80 als eine vorzugsweise warme Prägewalze bzw. Heizwalze und die an der Grundierungsschicht 15 der Mehrschichtfolie 5 anliegende Walze 81 als eine vorzugsweise kalte Gegendruckwalze ausgebildet. Der bei der Lamination/Kaschur vorliegende Druck und die Temperatur hängt von der Art der verwendeten Klebeschichten 4, 9 ab. Bevorzugt erfolgt die Lamination/Kaschur der beiden Folien 1, 5 bei einer Temperatur von ca. 120 °C und einem Anpressdruck von ca. 80 bar.

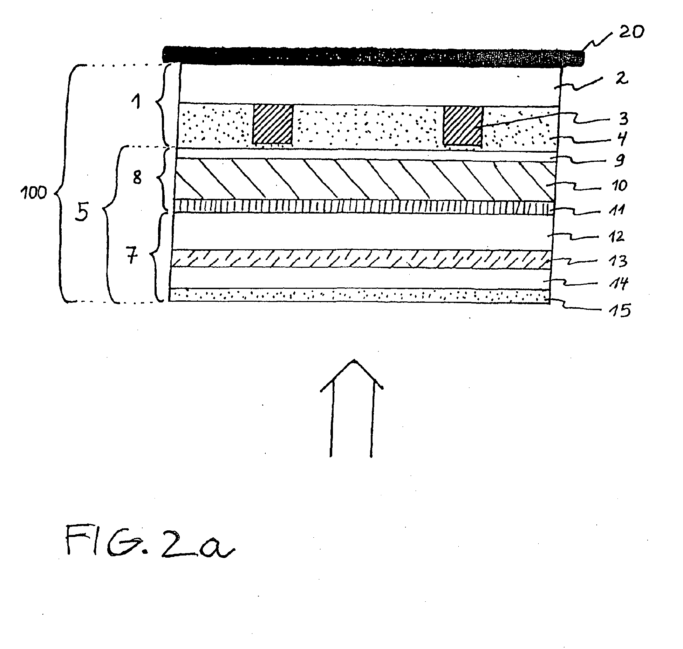

Die Figuren 2a bis 2c illustrieren drei Schritte zur Herstellung eines ersten dekorierten, ein Oberflächenrelief aufweisenden Kunststoffartikels in einem IMD-Verfahren, unter Verwendung des in Fig. 1 gezeigten Mehrschichtkörpers 100.

Figur 2a zeigt einen Anordnungsschritt, bei dem der durch das in Figur 1 dargestellte Laminierverfahren hergestellte Mehrschichtkörper 100 in einer Spritzgussform 20 angeordnet wird. Der Mehrschichtkörper 100 umfasst eine Dekortransferfolie 5, bestehend aus einem Schichtsystem 8 und einer Übertragungslage 7, und eine darauf auflaminierte Relieffolie 1. Das Schichtsystem 8 umfasst die Klebeschicht 9, die zweite Trägerfolie 10 sowie die Ablöseschicht 11. Die Übertragungslage 7 umfasst die Schutzlackschicht 12, die Zwischenschicht 13, die Dekorschicht 14 sowie die Grundierungsschicht 15. Das Schichtsystem 8 wird nach dem Aufbringen des Mehrschichtkörpers 100 auf einen zu dekorierenden Grundkörper von der Übertragungslage 7 abgezogen. Dies erfolgt zu einem Zeitpunkt, da die Grundierungsschicht 15 bereits mechanisch fest mit dem Grundkörper verbunden ist. Figur 2a zeigt schematisch, wie der Mehrschichtkörper 100 in einem IMD-Verfahren eingesetzt wird. Es ist schematisch ein Ausschnitt aus der Spritzgussform 20 dargestellt, an deren starrer Innenwandung die Mehrschichtfolie 100 angelegt wird, wobei die erste Trägerfolie 2 der Relieffolie 1 unmittelbar an der Innenwandung der Spritzgussform 20 anliegt. Nach einem Schließen der Spritzgussform 20 wird eine Kunststoffspritzmasse, symbolisiert durch den dargestellten Pfeil, in die Spritzgussform 20 gespritzt und die Spritzgussform 20 damit gefüllt. Dabei wird der Mehrschichtkörper 100 gegen die Spritzgussform 20 gedrückt.

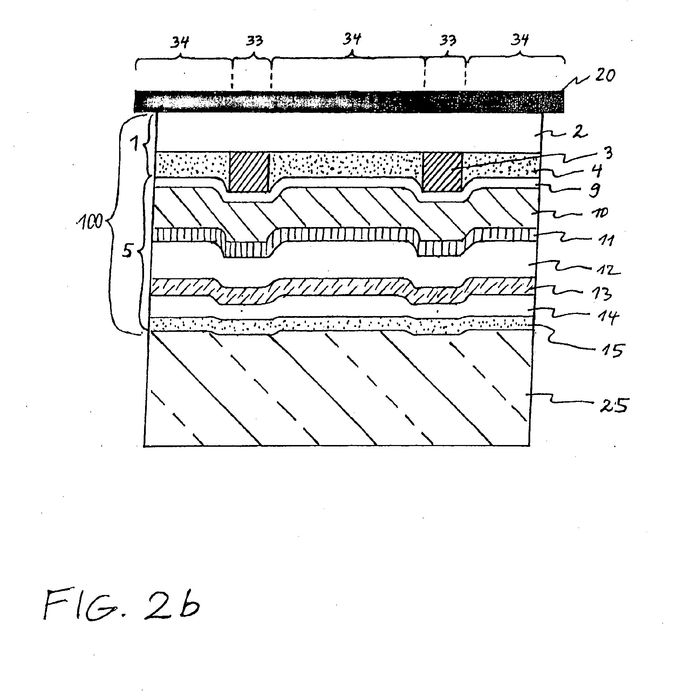

Fig. 2b zeigt einen Spritzgussschritt, bei dem der in der Spritzgussform 20 angeordnete Mehrschichtkörper 100 mit einer Kunststoffspritzmasse 25 hinterspritzt wird. In Figur 2b ist erkennbar, dass die Kunststoffspritzmasse 25 den Mehrschichtkörper 100 derart gegen die Spritzgussform 20 drückt, dass die Mehrschichtfolie 5 in den Bereichen 34, in denen die erste Trägerfolie 2 keine Strukturelemente bzw. in denen die Strukturschicht 3 Vertiefungen aufweist, in Richtung der Spritzgussform 20 gedrückt wird. In den Bereichen 33, in denen die erste Trägerfolie 2 mit der Strukturschicht 3 versehen ist, verbleibt die Mehrschichtfolie 5 dagegen im Wesentlichen in ihrer Position. Da die Strukturschicht 3 im Wesentlichen dem Spritzdruck und den Spritztemperaturen standhält, wirkt die Strukturschicht 3 als ein Abstandshalter zwischen der starren Innenwandung der Spritzgussform 20 und der Mehrschichtfolie 5, was bedeutet, dass die Strukturschicht 3 keine oder nur eine sehr geringe Deformation erfährt. Die Mehrschichtfolie 5 weist in Abhängigkeit von der Ausbildung der Strukturschicht 3 in den Bereichen 33 mit Strukturschicht 3 einen ebenen Verlauf und in den Bereichen 34 ohne Strukturschicht 3 einen zu der Relieffolie 1 hin ausgebauchten Verlauf auf. Im vorliegenden Fall, in dem die Strukturschicht 3 aus einzelnen mittels Siebdruck ausgebrachten Lackbereichen besteht, ergeben sich, wie in Fig. 2b dargestellt, Ausbauchungen, deren genaue Form von einer Reihe von Parametern abhängig ist, darunter dem Prägedruck, der Dehnfähigkeit der Mehrschichtfolie 5 und der Kompressionsfähigkeit der Klebeschicht 4. Je dünner die Klebeschicht 4 aufgetragen wird, desto genauer können die Ausbauchungen in der Mehrschichtfolie 5 den erhöhten Bereichen 33 der Strukturschicht 3 entsprechen, d.h. um so exakter wird das Relief in der Mehrschichtfolie 5 abgeformt.

Es ist möglich, dass bei einer Strukturschicht 3 mit geringerer Strukturtiefe, und eventuell einer geringeren Schichtdicke der Klebeschicht 4, als bei dem in Fig. 2b dargestellten Beispiel die Ausbauchungen bis zum Boden der vertieften Bereiche 34 gelangen und daher ein dort angeordnetes vorgegebenes Strukturierungselement der Mehrschichtfolie 5 auch in den Bereichen 34 ein Muster aufprägt, das durch das vorgegebene Strukturierungselement definiert ist.

Die Strukturschicht 3 wirkt in Bezug auf die Mehrschichtfolie 5 als ein feststehender Prägestempel, gegen den ein verformbares Material, d.h. die Mehrschichtfolie 5, gedrückt wird. Auf diese Weise prägt die Strukturschicht 3, durch die Klebeschicht 9, die zweite Trägerfolie 10 und die Ablöseschicht 11 hindurch, in die Schutzlackschicht 12 sowie in die Dekorschicht 14 ein Oberflächenrelief ein, das ein Negativ der Reliefstruktur der Strukturschicht 3 darstellt. Nach einer Aushärtung der Kunststoffspritzmasse zu einem Kunststoffmaterial 25 beziehungsweise nach einer Abkühlung der Kunststoffspritzmasse wird die Spritzgussform 20 geöffnet und das mit dem Mehrschichtkörper 100 verbundene Kunststoffmaterial 25 entnommen.

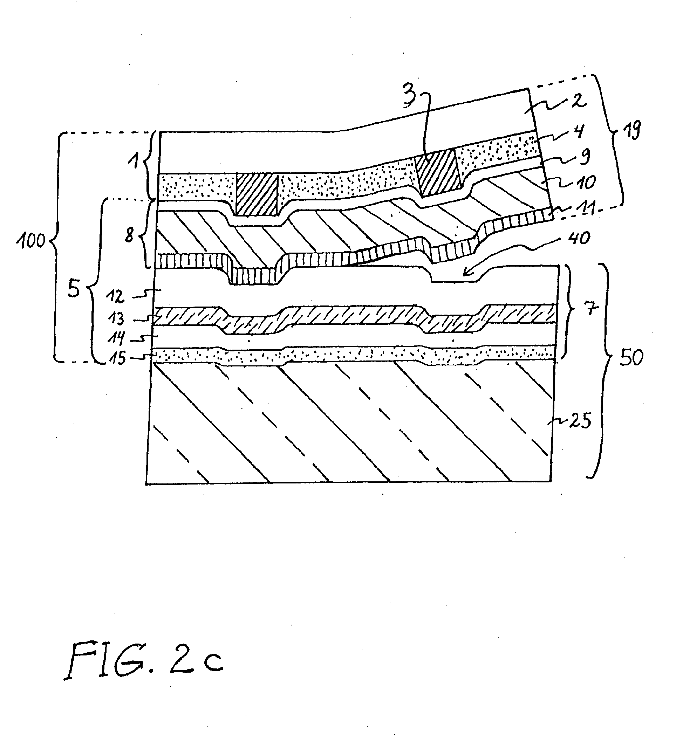

Figur 2c zeigt einen Abziehschritt, bei dem ein Folienkörper 19 von der Übertragungslage 7, die fest mit dem Kunststoffmaterial 25 verbunden ist, abgezogen wird. Der Folienkörper besteht aus dem Schichtsystem 8 und der Relieffolie 1. Der durch den Abziehschritt bereitgestellte, mit der als Dekorelement ausgebildeten Übertragungslage 7 dekorierte Spritzgussartikel 50 weist eine räumliche Strukturierung 40 im Bereich des Dekorelements 7 auf, wobei die räumliche Strukturierung 40 so ausgebildet ist, dass in den Bereichen 34, in denen keine Strukturschicht 3 vorhanden war bzw. in denen die Strukturschicht 3 Vertiefungen aufweist, Erhebungen ausgebildet sind, und in den Bereichen 33, in denen die Strukturschicht 3 angeordnet war, Täler bzw. Ebenen ausgebildet sind. Nach dem Abziehschritt erfolgt ein endgültiges Aushärten der UV-härtbaren Schutzlackschicht 12 am fertig dekorierten Kunststoffartikel 50, z.B. durch UV-Strahlung einer Quecksilber-Hochdruckdampflampe.

Bei Verwendung einer zweiten Trägerfolie 10 aus PET mit einer Dicke von 16 bis 23 µm, einer Klebeschicht 9 aus einem Haft- oder Kontaktkleber mit einer Dicke von 1 µm, einer Ablöseschicht 11 mit einer Dicke im Bereich von 0,1 µm und einer Strukturschicht 3 mit einer Strukturtiefe von ca. 20 µm beträgt die erzeugte Profiltiefe der räumlichen Strukturierung 40 in der Schutzlackschicht 12 des dekorierten Spritzgussartikels 50 etwa 15-20 µm. Die maximale Druckauflösung begrenzt das Auflösungsvermögen des Verfahrens. Bei einer Dicke der zweiten Trägerfolie 10 von ca. 20 µm, einer im Siebdruckverfahren hergestellten Strukturschicht 3 mit einer Strukturtiefe von ca. 20 µm und einem Strukturabstand von ca. 1 mm und einer gewünschten Tiefe der räumlichen Strukturierung 40 von etwa 15 bis 20 µm kann zirka eine Mindestlinienbreite von 500 µm angesetzt werden. Der Abstand zwischen zwei räumlichen Strukturen 40 in fertig dekorierten Kunststoffartikeln sollte ebenfalls in dieser Größenordnung oder darüber liegen. Bei Verwendung einer dünneren zweiten Trägerfolie 10 kann dieser Wert noch reduziert werden.

In Fig. 2b und 2c sind die Ausbauchungen in der Mehrschichtfolie 5 gegenüber der Strukturtiefe der Strukturschicht 3 in ihrer Strukturtiefe verringert, wobei diese Verringerung, wie oben bereits erwähnt, von verschiedenen Parametern abhängig ist. Vorteilhaft ist es dabei, wenn die Strukturtiefe der Ausbauchungen in der Mehrschichtfolie 5 nur wenig gegenüber der Strukturtiefe der Strukturschicht 3 verringert ist oder davon abweicht, sodass sich auch die Strukturtiefe der Strukturschicht 3 möglichst exakt als möglichst genauso tiefe Ausbauchungen in der Mehrschichtfolie 5 abformt.

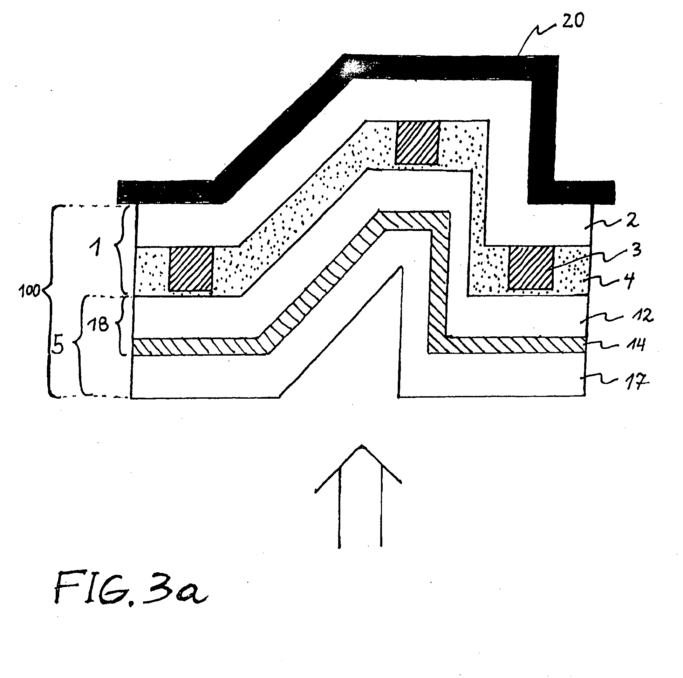

Die Figuren 3a bis 3c illustrieren drei Schritte zur Herstellung eines zweiten dekorierten, ein Oberflächenrelief aufweisenden Kunststoffartikels in einem IM-oder IML-Verfahren.

Figur 3a zeigt einen Anordnungsschritt, bei dem ein IM-fähiger, vorgeformter Mehrschichtkörper 100 in einer Spritzgussform 20 angeordnet wird. Der Mehrschichtkörper 100 besteht aus einer Relieffolie 1 und einer Mehrschichtfolie 5. Die Relieffolie 1 entspricht der Relieffolie, die in dem unter Figur 2a bis 2c beschriebenen Ausführungsbeispiel erläutert wurde. Die Strukturschicht 3 ist aus einem UV-härtbaren Lack hergestellt.

Die Mehrschichtfolie 5 ist als ein Insert Sheet ausgebildet ist, bestehend aus einer zweiten Trägerfolie 17, insbesondere einer ABS-Folie ("ABS-Sheet"), und einer auf der zweiten Trägerfolie 17 angeordneten Prägefolie 18. Die Prägefolie 18 besteht aus einer UV-härtbaren Schutzlackschicht 12 und einer Dekorschicht 14, wobei die Dekorschicht 14 zwischen der Schutzlackschicht 12 und der zweiten Trägerfolie 17 angeordnet ist. Die Herstellung des Insert Sheets 5 erfolgt durch Heißprägen der Prägefolie 18 auf die zweite Trägerfolie 17. Dazu wird eine Transferfolie, umfassend eine Trägerfolie und die als Übertragungslage ausgebildete Prägefolie 18, mit der ABS-Folie 17 zusammenlaminiert, so dass die Prägefolie 18 unmittelbar auf der ABS-Folie 17 zu liegen kommt. Daraufhin wird die Trägerfolie der Transferfolie abgezogen, wodurch die ABS-Folie 17 mit der fest damit verbundenen Prägefolie 18 als Mehrschichtfolie 5 bereitgestellt wird.

Die so gebildete Mehrschichtfolie 5 wird mit der Relieffolie 1 zusammenlaminiert. Vor dem Zusammenlaminieren der Relieffolie 1 und der Mehrschichtfolie 5 wird die Strukturschicht 3 der Relieffolie 1 ausgehärtet. Nach dem Aushärten weist der UV-Lack eine hohe Härte auf. Die Klebeschicht 4 der Relieffolie 1 ist in einer Schichtdicke aufgetragen, die größer als die Strukturtiefe der Strukturschicht 3 ist. Auf diese Weise ist die Strukturschicht 3 vollständig von der Klebeschicht 4 überdeckt. Die sehr harten Strukturen der Strukturschicht 3 sind in der Lage, sich durch die sehr viel weichere Klebeschicht 4 hindurchzudrücken. Die Klebeschicht 4 kann auch in einer sehr viel geringeren Schichtdicke aufgetragen sein, die wesentlich geringer ist als die Strukturtiefe der Strukturschicht 3, beispielsweise 1 bis 5 µm. Die Klebeschicht 4 bildet dann lediglich eine dünne Schicht auf den Strukturen der Strukturschicht 3 und zwischen diesen Strukturen auf der Trägerfolie 2. Die Schutzlackschicht 12, z.B. aus einem chemisch und/oder physikalisch vernetzten Lacksystem gebildet, wird vor dem Zusammenlaminieren nicht gehärtet oder nur vorgehärtet.

Wenn die Mehrschichtfolie 5 zum Einsatz in einem IM-Verfahren vorgesehen ist, wie in diesem Ausführungsbeispiel, hat es sich besonders bewährt, wenn die erste Trägerfolie 2 der Relieffolie 1 als eine besonders flexible PET-Folie ausgebildet ist. Beispielsweise kann dafür eine bekannte PET-Folie mit einer Foliendicke im Bereich von 19 bis 50 µm verwendet werden, die zumindest in einer Richtung einen Elastizitätsmodul im Bereich von 3500 bis 5000 N/mm² aufweist.

Weiter bevorzugt ist es in diesem Fall, wenn zum Kaschieren der Relieffolie 1 auf das Insert Sheet 5 ein nur leicht haftender Haftkleber als Klebeschicht 4 verwendet wird. Nach dem Kaschieren der Relieffolie 1 auf das Insert Sheet 5 wird der so gebildete Mehrschichtkörper 100 unter Hitze vakuumgeformt, wobei die Relieffolie 1 so ausgebildet ist, dass sie an dieser Vakuumformung ohne Beschädigung teilnehmen kann. Die derart vakuumgeformten Lagen von Trägerfolie 17, Heißprägefolie 18 und Relieffolie 1, die das sogenannte "Insert" bilden, werden konturgenau ausgeschnitten bzw. -gestanzt. Es ist schematisch ein Ausschnitt aus einer Spritzgussform 20 dargestellt, die eine Innenwandung aufweist, deren Oberflächenkontur der Form des Inserts 100 entspricht. Die Mehrschichtfolie 100 wird an die starre Innenwandung der Spritzgussform 20 angelegt, wobei die erste Trägerfolie 2 der Relieffolie 1 unmittelbar an der Innenwandung der Spritzgussform 20 anliegt. Nach einem Schließen der Spritzgussform 20 wird eine Kunststoffspritzmasse, symbolisiert durch den dargestellten Pfeil, in die Spritzgussform 20 gespritzt und die Spritzgussform 20 damit gefüllt. Dabei wird der Mehrschichtkörper 100 gegen die Spritzgussform 20 gedrückt.

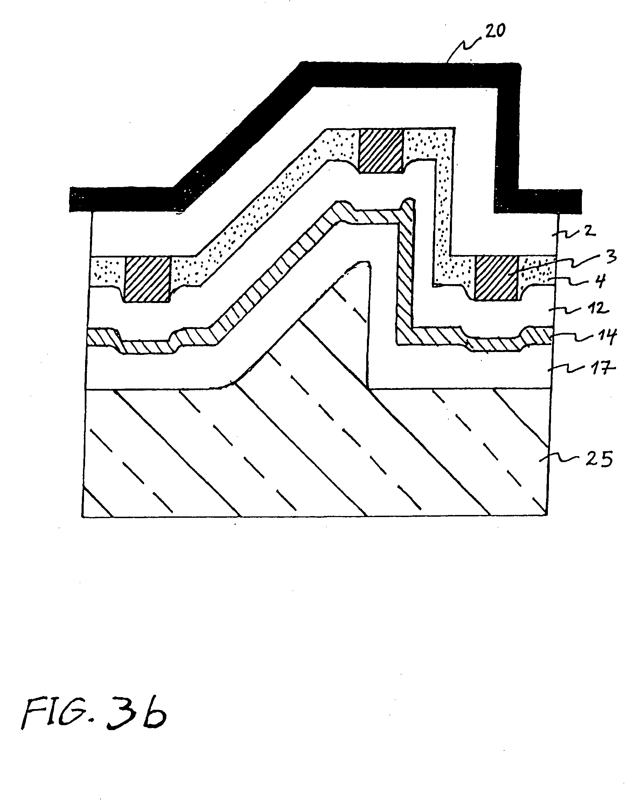

Fig. 3b zeigt einen Spritzgussschritt, der im Wesentlichen dem unter Fig. 2b beschriebenen Spritzgussschritt entspricht, auf den hier verwiesen wird.

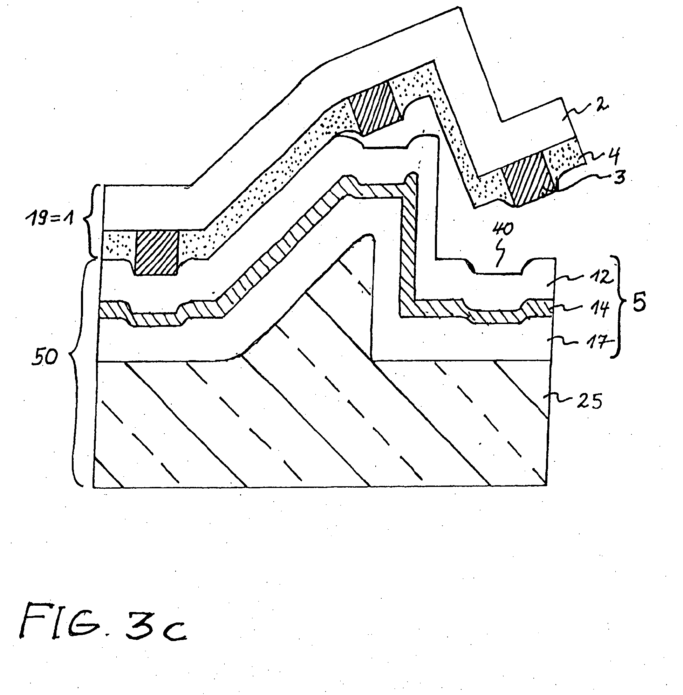

Figur 3c zeigt einen Abziehschritt, bei dem ein Folienkörper 19 von der Mehrschichtfolie 5, die fest mit dem Kunststoffmaterial 25 verbunden ist, abgezogen wird. Der Folienkörper 19 besteht aus der Relieffolie 1. Der durch den Abziehschritt bereitgestellte, mit der als Dekorelement ausgebildeten Mehrschichtfolie 5 dekorierte Spritzgussartikel 50 weist eine räumliche Strukturierung 40 im Bereich des Dekorelements 5 auf, wobei in den Bereichen, in denen keine Strukturschicht 3 vorhanden war, Erhebungen ausgebildet sind, und in den Bereichen, in denen die Strukturschicht 3 angeordnet war, Täler bzw. Ebenen ausgebildet sind. Nach dem Abziehschritt erfolgt ein endgültiges Aushärten der UV-härtbaren Schutzlackschicht 12 am fertig dekorierten Kunststoffartikel 50.

In Fig. 3b und 3c sind die Ausbauchungen in der Mehrschichtfolie 5 gegenüber der Strukturtiefe der Strukturschicht 3 in ihrer Strukturtiefe verringert, wobei diese Verringerung, wie oben bzgl. Fig. 2a, 2b, 2c bereits erwähnt, von verschiedenen Parametern abhängig ist. Vorteilhaft ist es dabei auch hier, wenn die Strukturtiefe der Ausbauchungen in der Mehrschichtfolie 5 nur wenig gegenüber der Strukturtiefe der Strukturschicht 3 verringert ist oder davon abweicht, sodass sich auch die Strukturtiefe der Strukturschicht 3 möglichst exakt als möglichst genauso tiefe Ausbauchungen in der Mehrschichtfolie 5 abformt.

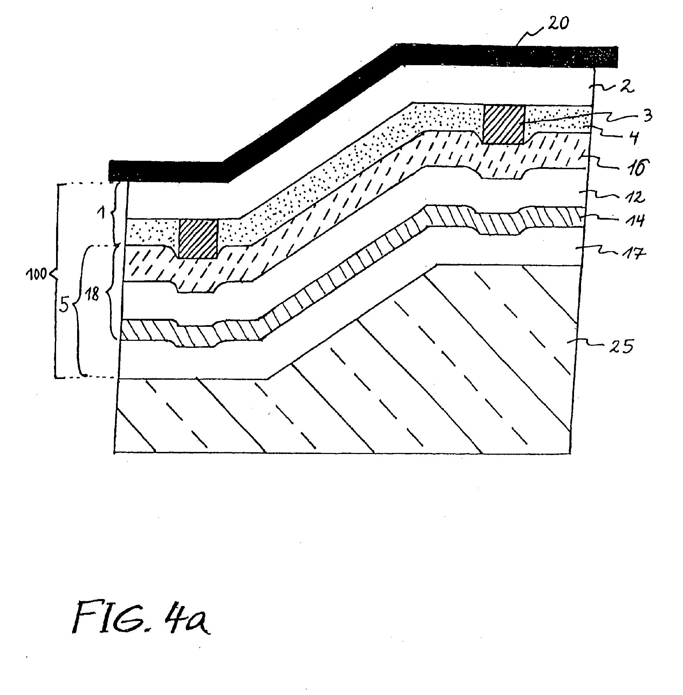

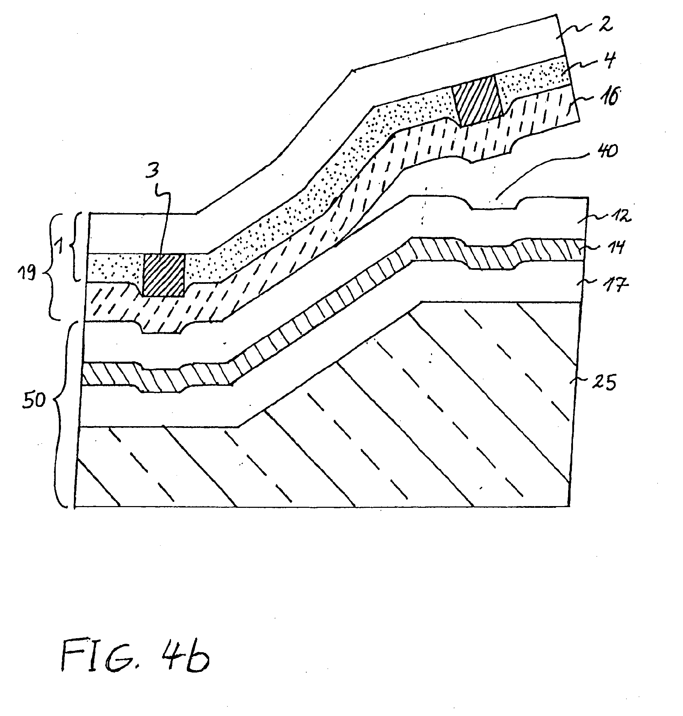

Die Figuren 4a und 4b illustrieren zwei Schritte zur Herstellung eines weiteren dekorierten, ein Oberflächenrelief aufweisenden Kunststoffartikels in einem IM-oder IML-Verfahren. Das in den Fig. 4a und 4b illustrierte Verfahren ist eine Variante des zu den Figuren 3a bis 3c beschriebenen Verfahrens.

Figur 4a zeigt eine Variante eines als Insert Sheet ausgebildeten Mehrschichtkörpers 100, bei dem die Mehrschichtfolie 5 zusätzlich zu der in Figur 3a gezeigten Mehrschichtfolie 5 eine dritte Trägerfolie 16 aufweist, die in dem Herstellungsprozess der Mehrschichtfolie 5 als Trägerfolie der Heißprägefolie 18 dient und nach dem Heißprägen der Heißprägefolie 18, im Gegensatz zu der in Fig. 3a gezeigten Mehrschichtfolie, auf das ABS-Sheet 17 auf der Schutzlackschicht 12 belassen worden ist.

Fig. 4a zeigt einen Spritzgussschritt, der im Wesentlichen dem unter Fig. 2b beschriebenen Spritzgussschritt entspricht, auf den hier verwiesen wird. Zwischen der Schutzlackschicht 12 und der als Polyesterfolie ausgebildeten dritten Trägerfolie 16 befindet sich keine Ablöseschicht, sondern die Verbindung zwischen diesen beiden Schichten 12, 16 basiert auf Adhäsionskräften. Im Gegensatz zu dem in Figur 3a dargestellten Ausführungsbeispiel ist bei der in Figur 4a dargestellten Variante die Klebeschicht 4 der Relieffolie 1 als ein besonders stark haftender Kleber ausgebildet. Bezüglich der anderen Elemente wird auf die Beschreibung zu Fig. 3a und Fig. 3b verwiesen.

Figur 4b zeigt einen Abziehschritt, bei dem ein Folienkörper 19 von einer Dekorlage, gebildet aus der UV-härtbaren Schutzlackschicht 12, der Dekorschicht 14 und der zweiten Trägerfolie 17, die fest mit dem Kunststoffmaterial 25 verbunden ist, abgezogen wird. Der Folienkörper 19 besteht aus der Relieffolie 1 und der dritten Trägerfolie 16. Der durch den Abziehschritt bereitgestellte, mit der Schutzlackschicht 12, der Dekorschicht 14 und der zweiten Trägerfolie 17 dekorierte Spritzgussartikel 50 weist eine räumliche Strukturierung 40 im Bereich der Dekorlage auf, wobei in den Bereichen, in denen keine Strukturschicht 3 vorhanden war, Erhebungen ausgebildet sind, und in den Bereichen, in denen die Strukturschicht 3 angeordnet war, Täler bzw. Ebenen ausgebildet sind. Nach dem Abziehschritt erfolgt ein endgültiges Aushärten der UV-härtbaren Schutzlackschicht 12 am fertig dekorierten Kunststoffartikel 50.

Durch die Verwendung der dritten Trägerfolie 16 als Trennschicht zwischen der Klebeschicht 4 und der Schutzlackschicht 12 ist es möglich, von der Klebeschicht 4 herrührende Kleberrückstände auf der Schutzlackschicht 12 zu vermeiden.

In Fig. 4a und 4b sind die Ausbauchungen in der Mehrschichtfolie 5 gegenüber der Strukturtiefe der Strukturschicht 3 in ihrer Strukturtiefe verringert, wobei diese Verringerung, wie oben bzgl. Fig. 2a, 2b, 2c bereits erwähnt, von verschiedenen Parametern abhängig ist. Vorteilhaft ist es dabei auch hier, wenn die Strukturtiefe der Ausbauchungen in der Mehrschichtfolie 5 nur wenig gegenüber der Strukturtiefe der Strukturschicht 3 verringert ist oder davon abweicht, sodass sich auch die Strukturtiefe der Strukturschicht 3 möglichst exakt als möglichst genauso tiefe Ausbauchungen in der Mehrschichtfolie 5 abformt.

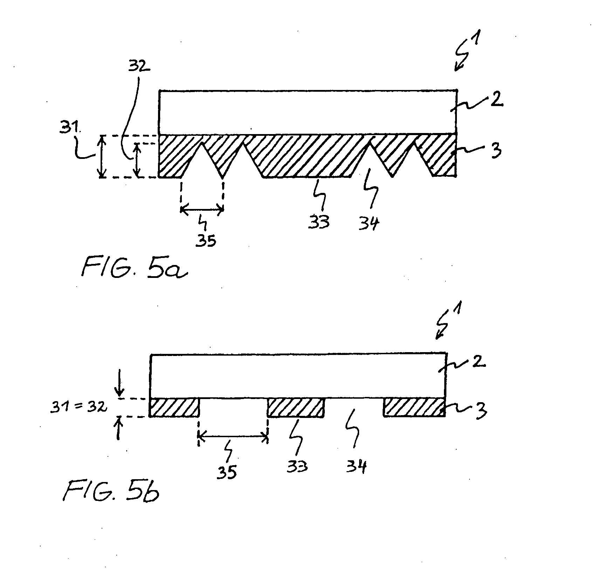

Die Figuren 5a und 5b zeigen zwei verschiedene Ausführungsbeispiele der Strukturschicht 3. In den Figuren 1 bis 4b wurden Strukturschichten 3 dargestellt, die durch einen Siebdruck auf der ersten Trägerfolie 2 aufgebracht wurden. Der Vorteil dieser Beschichtungsart liegt in der dadurch erzielbaren hohen Strukturtiefe der Strukturschicht 3. Auf diese Weise können tief eingeprägte Oberflächenreliefs erzeugt werden.

Fig. 5a zeigt eine Relieffolie 1 mit einer ersten Trägerfolie 2 und einer Strukturschicht 3, die aus einem Replizierlack gebildet ist. Zur Herstellung dieser Strukturschicht wird auf die erste Trägerfolie 2 eine gleichmäßige Replizierlackschicht 3 mit einer Schichtdicke 31 aufgebracht, in die mittels eines Prägewerkzeugs, beispielsweise einer Replizierwalze oder eines Prägestempels, ein Relief mit einer Strukturtiefe 32 (auch als Profiltiefe bezeichnet) eingeprägt wird. Das Relief weist erhöhte Bereiche 33 und vertiefte Bereiche 34 auf. Die Strukturtiefe 32 ist der Höhenabstand zwischen den erhöhten Bereichen/Erhebungen 33 des Reliefs bzw. deren höchstem Punkt und den vertieften Bereichen/ Vertiefungen 34 des Reliefs bzw. deren tiefstem Punkt. Falls die Strukturtiefe 32 geringer als die Schichtdicke 31 gewählt wird, ist der Boden der vertieften Bereiche 34 von dem Replizierlack bedeckt. Der Abstand 35 zwischen den erhöhten Bereichen 33 bestimmt ebenfalls das geprägte Oberflächenrelief 40. Nach einem Aushärten des Replizierlacks kann die Replizierlackschicht 3 mit einer Klebeschicht 4 beschichtet werden.

Fig. 5b zeigt eine Relieffolie 1 mit einer ersten Trägerfolie 2 und einer Strukturschicht 3, die aus einer Metallschicht gebildet ist. Zur Herstellung dieser Strukturschicht wird die erste Trägerfolie zunächst auf einer Seite vollflächig mit einer Metallschicht versehen. Dazu wird beispielsweise eine dünne Metallfolie, z.B. aus Aluminium oder Kupfer, auf die Trägerfolie aufkaschiert oder auflaminiert. Die Schichtdicke 31 der Metallfolie beträgt dabei in etwa 1 µm bis 200 µm. Dann wird die Metallschicht 3 mittels eines herkömmlichen Demetallisierungsverfahrens, z.B. Belichten und Ätzen, Laserablation, etc., bereichsweise wieder entfernt. Die demetallisierten Bereiche der ersten Trägerfolie 1 bilden die vertieften Bereiche 34 des Reliefs, die metallisierten Bereiche der ersten Trägerfolie 1 bilden die erhöhten Bereiche 33 des Reliefs. Durch den Wechsel zwischen den metallisierten Bereichen 33 und den demetallisierten 34 Bereichen bildet die Metallschicht 3 ein Relief mit einer Strukturtiefe 31 und einem Abstand 35 zwischen benachbarten metallisierten Bereichen 33. Da die Strukturtiefe 31 gleich der Schichtdicke 31 ist, wird der Boden der vertieften Bereiche 34 durch die Oberfläche der ersten Trägerfolie 2 gebildet. Die Strukturschicht 3 kann schließlich mit einer vorzugsweise dünnen Klebeschicht 4 beschichtet werden. Eine derartig hergestellte Strukturschicht 3 kann eine sehr hohe Auflösung kombiniert mit einer hohen Schichtdicke und einer hohen Härte aufweisen. Insbesondere mit bekannten Ätzverfahren oder Belichtungsverfahren mit Positiv- oder Negativ-Photoresists sind hohe Auflösungen und Strukturgenauigkeiten erzielbar. Mit einer so hergestellten Strukturschicht 3 kann ein Oberflächenrelief sehr genau in der Oberfläche eines Kunststoffartikels abgeformt werden. Es sind dabei auch je nach Dicke der verwendeten Metallschicht sehr große Strukturtiefen in hoher Qualität abformbar.

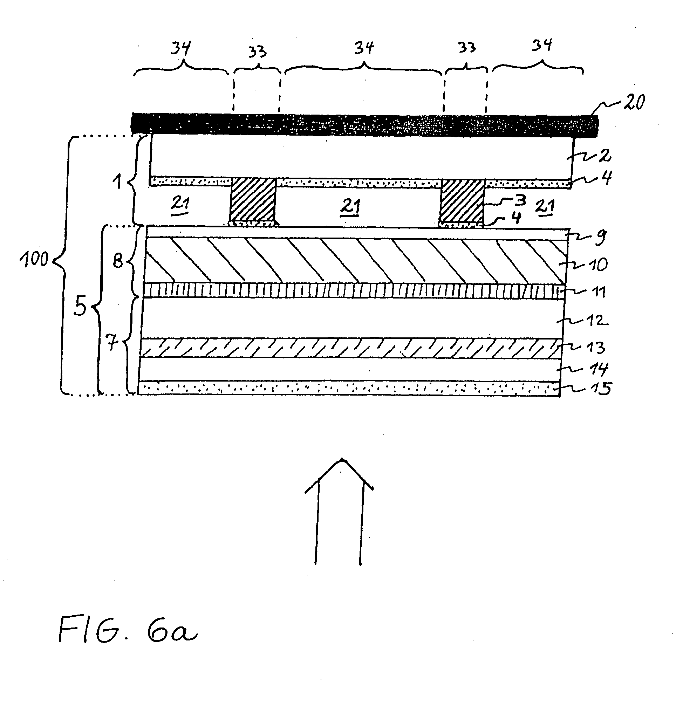

Fig. 6a bis 6c illustrieren drei Schritte zur Herstellung eines weiteren dekorierten, ein Oberflächenrelief aufweisenden Kunststoffartikels in einem IMD-Verfahren. Die darin gezeigten Verfahrensschritte sind ähnlich den in Fig. 2a bis 2c gezeigten Verfahrenschritten, allerdings mit dem Unterschied, dass bei den in Fig. 6a bis 6c dargestellten Verfahrensschritten ein Mehrschichtkörper 100 verwendet wird, der eine dünne Klebeschicht 4 aufweist, d.h. eine Klebeschicht 4, deren Dicke im Vergleich zu der Strukturtiefe der Strukturschicht 3 klein ist.

Fig. 6a entspricht, abgesehen von der Ausgestaltung der Klebeschicht 4, der in Fig. 2a gezeigten Darstellung, auf die daher verwiesen wird. Die Klebeschicht 4 ist als eine dünne Schicht ausgebildet, die zwischen und auf den Struktur-/ Reliefelementen der Strukturschicht 3 angeordnet ist. Die Schichtdicke der Klebeschicht 4 ist wesentlich geringer ist als die Strukturtiefe der Strukturschicht 3. Beispielsweise liegt die Schichtdicke der Klebeschicht 4 im Bereich von 1 bis 5 µm während die Strukturtiefe der Strukturschicht 3 im Bereich von 5 bis 250 µm liegt.

Zwischen der Klebeschicht 4 und der Klebeschicht 9 liegt in den Bereichen 34, in denen die Strukturschicht 3 Vertiefungen aufweist, ein Hohlraum 21 vor, der mit Luft gefüllt sein kann. Der Hohlraum 21 kann auch, beispielsweise hervorgerufen durch einen Evakuierungsschritt der Spritzgussform 20 unmittelbar vor dem Einspritzen der Kunststoffmasse und/oder durch ein Vakuumansaugen, vorzugsweise in Verbindung mit einer Vorwärmung, des Mehrschichtkörpers 100 an die Innenwandung der Spritzgussform 20 zur Vermeidung von Faltenbildung evakuiert sein und ein Vakuum beinhalten. Ebenso ist es möglich, dass der Hohlraum 21 mit einem Schutzgas, z.B. CO₂ oder Argon, vorzugsweise mit geringem Druck, gefüllt ist.

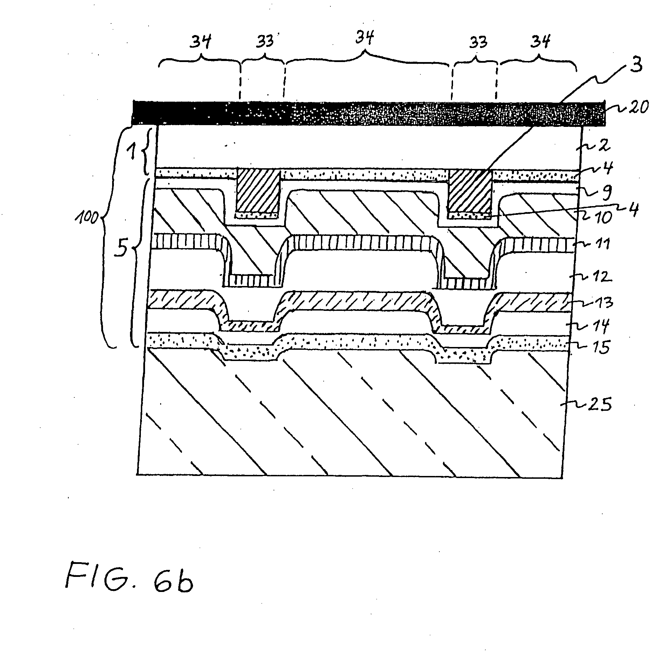

Fig. 6b zeigt einen Spritzgussschritt, der, abgesehen von der Ausgestaltung der Klebeschicht 4 und der Stärke der Ausprägung des Reliefs in dem Mehrschichtkörper 100, dem in Fig. 2b gezeigten Spritzgussschritt entspricht, auf den daher verwiesen wird. Die Mehrschichtfolie 5 des in Fig. 6a dargestellten Mehrschichtkörpers 100 wird während des Hinterspritzens der Kunststoffspritzmasse 25 mittels der Strukturschicht 3 stark verformt. Durch die geringe Schichtdicke der Klebeschicht 4 ist die Mehrschichtfolie 5 in der Lage, sich der Reliefform der Strukturschicht 5 genau anzupassen. Daher kann sich das Relief der Strukturschicht 5 aufgrund der dünnen Klebeschicht 4 genau in die Mehrschichtfolie 5 abformen. Durch die Verformung der Mehrschichtfolie 5 in die Vertiefungen 34 der Strukturschicht 3 füllen die obersten Schichten der Mehrschichtfolie 5, insbesondere die Klebeschicht 9 und die Trägerfolie 10, den Hohlraum 21 aus, der somit nach dem Hinterspritzen nicht mehr vorhanden ist. Je dünner die Klebeschicht 4 auf der Strukturschicht 3 aufgetragen ist, desto genauer können die Ausbauchungen in der Mehrschichtfolie 5 den Vertiefungen 34 der Strukturschicht 3 entsprechen, d.h. desto exakter wird das Relief der Relieffolie1 in der Mehrschichtfolie 5 abgeformt. Insbesondere die Strukturtiefe der Strukturschicht 3 kann mit einer möglichst dünnen Klebeschicht 4 sehr exakt als nahezu ebenso tiefe Ausbauchungen in der Mehrschichtfolie 5 abgeformt sein, vorzugsweise in allen Schichten der Mehrschichtfolie 5.

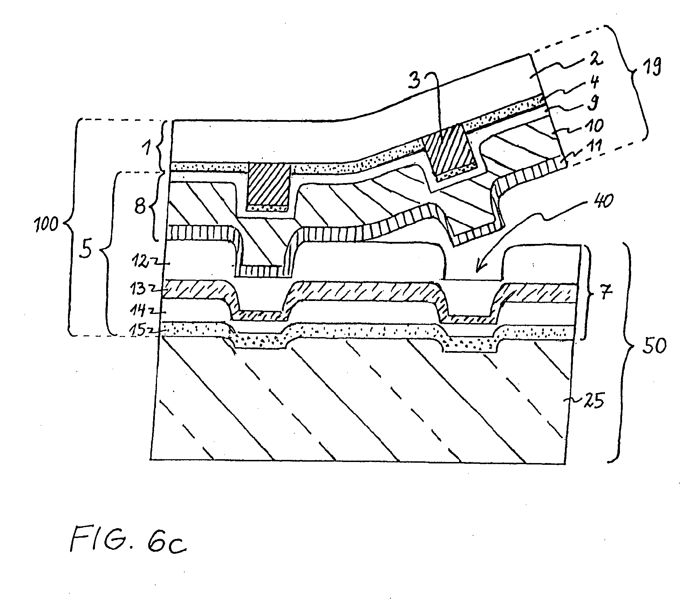

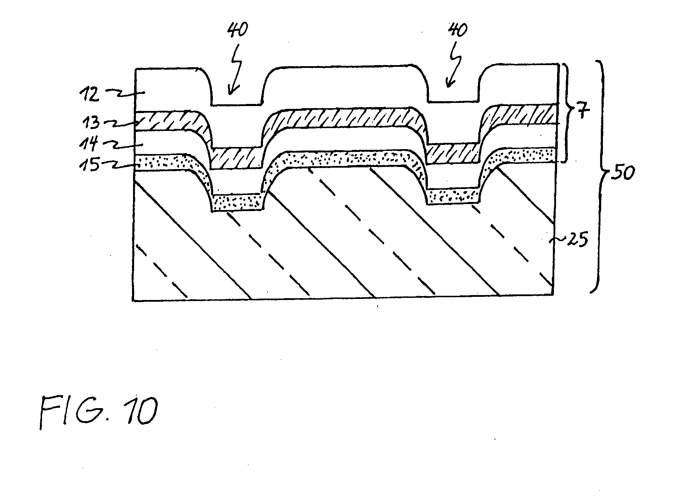

Fig. 6c zeigt einen Verfahrensschritt, der, abgesehen von der Ausgestaltung der Klebeschicht 4 und der Stärke der Ausprägung des Reliefs in dem Mehrschichtkörper 100, dem in Fig. 2c gezeigten Abziehschritt entspricht, auf den daher verwiesen wird. Die Schichtdicke der Klebeschicht 4 ist wesentlich geringer ist als die Strukturtiefe der Strukturschicht 3. Aufgrund der dünnen Klebeschicht 4 hat sich das Relief der Strukturschicht 5 präzise und tief in die Mehrschichtfolie 5 abgeformt. Die Profiltiefe des in dem Spritzgussartikel 50 vorliegenden Oberflächenreliefs 40 ist wesentlich größer als bei dem in Fig. 2c gezeigten Spritzgussartikel 50. Es ist möglich, dass diese Profiltiefe der Strukturtiefe der Strukturschicht 3 zumindest annährend entspricht. Es ist auch möglich, dass das Oberflächenrelief 40 in allen Schichten 12-15 der Übertragungslage 7 mit im Wesentlichen gleicher Profiltiefe abgeformt ist, so wie es in Fig. 10 dargestellt ist, und die Profiltiefe nicht, wie in Fig. 6c dargestellt, innerhalb der Übertragungslage 7 von einer ersten Schicht 12, 13, 14 der Übertragungslage 7 zu einer im Vergleich dazu weiter weg von der Relieffolie 1 angeordneten zweiten Schicht 13, 14, 15 der Übertragungslage 7 abnimmt.

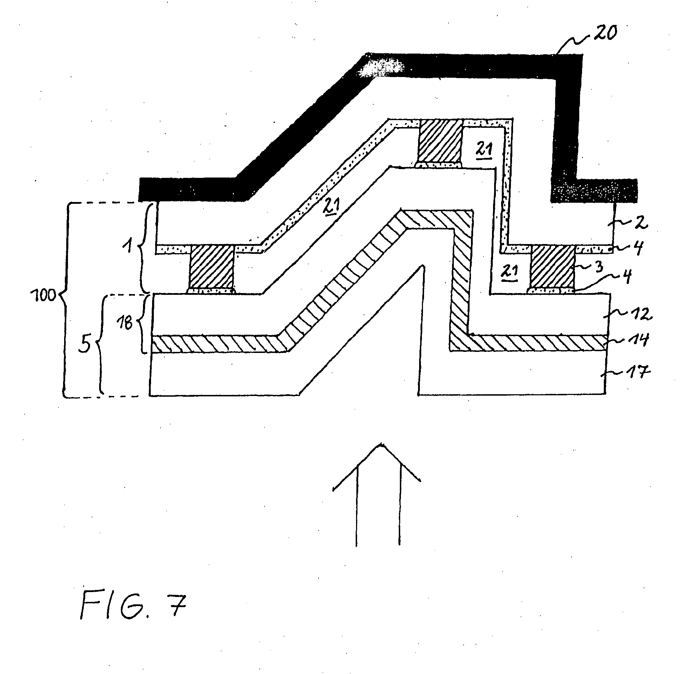

Figur 7 zeigt einen Verfahrensschritt zur Herstellung eines weiteren dekorierten, ein Oberflächenrelief aufweisenden Kunststoffartikels ähnlich dem in Fig. 3a dargestellten Verfahrensschritt, auf den daher verwiesen wird, wobei allerdings im Gegensatz zu dem in Fig. 3a dargestellten Verfahrensschritt ein Mehrschichtkörper 100 verwendet wird, der eine dünne Klebeschicht 4 aufweist, d.h. eine Klebeschicht 4, deren Dicke im Vergleich zu der Strukturtiefe der Strukturschicht 3 klein ist. Die Klebeschicht 4 ist als eine dünne Schicht ausgebildet, die zwischen und auf den Struktur-/ Reliefelementen der Strukturschicht 3 angeordnet ist. Die Schichtdicke der Klebeschicht 4 ist wesentlich geringer ist als die Strukturtiefe der Strukturschicht 3. Beispielsweise liegt die Schichtdicke der Klebeschicht 4 im Bereich von 1 bis 5 µm während die Strukturtiefe der Strukturschicht 3 im Bereich von 5 bis 250 µm liegt. Zwischen der Klebeschicht 4 und der Klebeschicht 9 liegt in den Bereichen 34, in denen die Strukturschicht 3 Vertiefungen aufweist, ein Hohlraum 21 vor, der mit Luft gefüllt sein kann. Wie bereits zu Fig. 6a ausgeführt, kann der Hohlraum 21 auch ein Vakuum oder ein Schutzgas beinhalten. Dadurch kann sich während des Hinterspritzens des Mehrschichtkörpers 100 mit Kunststoffspritzmasse die Mehrschichtfolie 5 besonders gut und präzise an das Relief der Strukturschicht 3 anschmiegen.

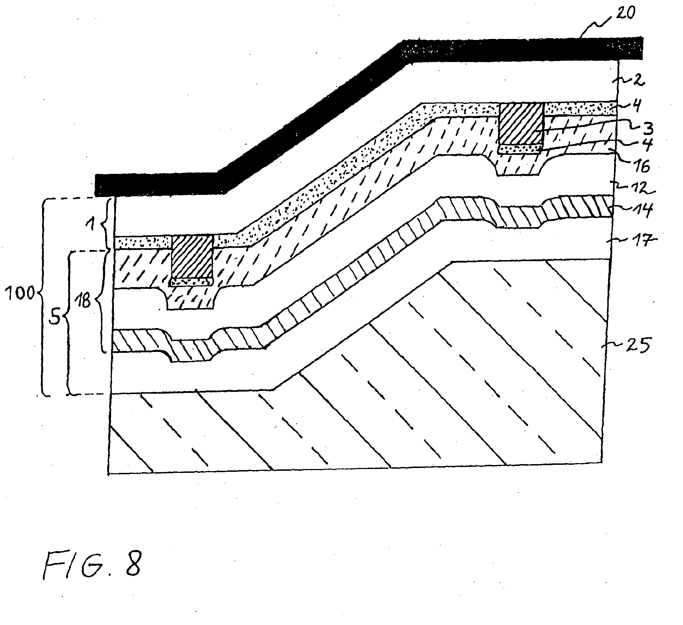

Figur 8 zeigt einen Verfahrensschritt zur Herstellung eines weiteren dekorierten, ein Oberflächenrelief aufweisenden Kunststoffartikels ähnlich dem in Fig. 4a dargestellten Verfahrensschritt, auf den daher verwiesen wird, wobei allerdings im Gegensatz zu dem in Fig. 4a dargestellten Verfahrensschritt ein Mehrschichtkörper 100 verwendet wird, der eine dünne Klebeschicht 4 aufweist, d.h. eine Klebeschicht 4, deren Dicke im Vergleich zu der Strukturtiefe der Strukturschicht 3 klein ist. Die Klebeschicht 4 ist als eine dünne Schicht ausgebildet, die zwischen und auf den Struktur-/ Reliefelementen der Strukturschicht 3 angeordnet ist. Die Schichtdicke der Klebeschicht 4 ist wesentlich geringer ist als die Strukturtiefe der Strukturschicht 3. Beispielsweise liegt die Schichtdicke der Klebeschicht 4 im Bereich von 1 bis 5 µm während die Strukturtiefe der Strukturschicht 3 im Bereich von 5 bis 250 µm liegt. Dadurch konnte sich während des Hinterspritzens des Mehrschichtkörpers 100 mit der Kunststoffspritzmasse 25 die Mehrschichtfolie 5 besonders gut und präzise an das Relief der Strukturschicht 3 anschmiegen.

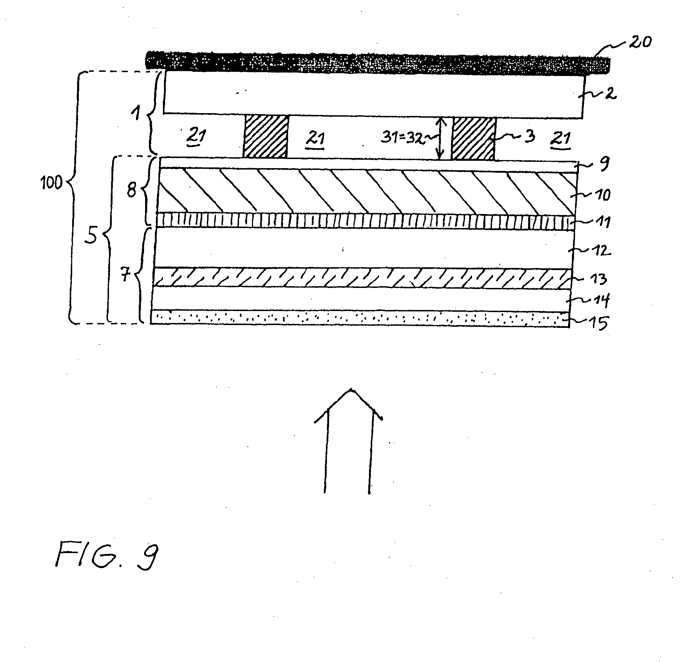

Figur 9 zeigt einen Verfahrensschritt zur Herstellung eines weiteren dekorierten, ein Oberflächenrelief aufweisenden Kunststoffartikels. Fig. 9 entspricht, abgesehen von der hier fehlenden Klebeschicht 4, der in Fig. 2a gezeigten Darstellung, auf die daher verwiesen wird. Auf die Anordnung einer Klebeschicht 4 zwischen und auf den Struktur-/ Reliefelementen der Strukturschicht 3 wurde bei diesem Ausführungsbeispiel verzichtet, da die Haftverbindung zwischen der Relieffolie 1 und der Mehrschichtfolie 5 durch die Klebeschicht 9, die auf der Mehrschichtfolie 5 angeordnet ist, ausgebildet wird. Daher besteht die Relieffolie 1 lediglich aus der Trägerfolie 2 und der darauf angeordneten Strukturschicht 3. Durch die fehlende Klebeschicht 4 liegen die Vertiefungen der Strukturschicht 3 als Hohlräume 21 vor, deren Tiefe der Schichtdicke 31 und der Strukturtiefe 32 der Strukturschicht 3 entspricht, was eine besonders starke Profilierung des Oberflächenreliefs 40 des Spritzgussartikels 50 möglich macht.

Alternativ zu dem in Fig. 9 dargestellten Ausführungsbeispiel kann auch vorgesehen sein, die Klebeschicht 4 zwischen und auf den Struktur-/ Reliefelementen der Strukturschicht 3 auszubilden und auf die Klebeschicht 9, die auf der Mehrschichtfolie 5 angeordnet ist, zu verzichten. In diesem alternativen Fall weist die Transferfolie 5 eine zweite Trägerfolie 10, eine Ablöseschicht 11, eine als transparente Schutzlackschicht ausgebildete erste Dekorschicht 12, eine Zwischenschicht 13, eine als ein Dekorschichtpaket ausgebildete zweite Dekorschicht 14, sowie eine Grundierungsschicht 15 auf.

Fig. 10 zeigt einen Schnitt einer Oberfläche eines dekorierten, ein Oberflächenrelief 40 aufweisenden Kunststoffartikels 50, der gemäß eines der erfindungsgemäßen Verfahren zur Herstellung eines dekorierten, ein Oberflächenrelief aufweisenden Kunststoffartikels bereitgestellt wurde. Wie bereits zu den Fig. 2a bis 2c erläutert, wurde in einem Spritzguss- oder Heißprägeschritt eine Mehrschichtfolie 5 mit einem Kunststoffmaterial 25 verbunden, wobei eine Strukturschicht 3 einer Relieffolie 1 in die Mehrschichtfolie 5 ein Relief einprägt. Durch eine geeignete Wahl der Material- und Verfahrensparameter ist es möglich, dass das Relief der Strukturschicht 3 in allen Schichten der Mehrschichtfolie 5 mit im Wesentlichen gleicher Profiltiefe abgeformt wird. Nach einem Abziehschritt eines Folienpakets verbleibt eine Übertragungslage 7 fest mit dem Kunststoffmaterial 25 verbunden, wobei die Übertragungslage 7 eine Schutzlackschicht 12, eine Zwischenschicht 13, eine Dekorschicht 14 sowie eine Grundierungsschicht 15 umfasst. Der dadurch bereitgestellte, mit der als Dekorelement ausgebildeten Übertragungslage 7 dekorierte Spritzgussartikel 50 weist eine räumliche Strukturierung 40 im Bereich des Dekorelements 7 auf, wobei die räumliche Strukturierung 40 so ausgebildet ist, dass das Oberflächenrelief 40 in allen Schichten 12-15 der Übertragungslage 7 mit im Wesentlichen gleicher Profiltiefe abgeformt ist.

### Bezugszeichenliste

- 1: Relieffolie
- 2: Trägerfolie (von 1)
- 3: Strukturschicht
- 4: Klebeschicht (von 1)
- 5: Mehrschichtfolie
- 7: Übertragungslage
- 8: Schichtsystem
- 9: Klebeschicht (von 5)
- 10: Trägerfolie (von 5)
- 11: Ablöseschicht
- 12: Dekorschicht, erste
- 13: Zwischenschicht
- 14: Dekorschicht, zweite
- 15: Grundierungsschicht
- 16, 17: Trägerfolie (von 5)
- 18: Prägefolie
- 19: Folienkörper
- 20: Spritzgussform
- 21: Hohlraum
- 25: Kunststoffmaterial
- 31: Schichtdicke (von 3)
- 32: Strukturtiefe (von 3)
- 33: erhöhter Bereich, Erhebung (von 3)
- 34: vertiefter Bereich, Vertiefung (von 3)
- 35: Abstand (von 33)
- 40: Oberflächenrelief
- 50: Kunststoffartikel, Spritzgussartikel
- 80, 81: Walze
- 100: Mehrschichtkörper

## Patentansprüche

1. Mehrschichtkörper (100) zur Herstellung eines dekorierten, ein Oberflächenrelief (40) aufweisenden Kunststoflartikels (50), umfassend eine Reileffolie (1) mit einer ersten Trägerfolie (2) und einer auf einer Seite der ersten Trägerfolie (2) angeordneten Strukturschicht (3) und eine Mehrschichtfolie (5) mit einer zweiten Trägerfolie (10, 17) und mindestens einer Dekorschicht (12, 14), wobei die Strukturschicht (3) zwischen der ersten Trägerfolie (2) und der zweiten Trägerfolie (10, 17) angeordnet ist, der Mehrschichtkörper (100) einen die Relieffolie (1) umfassenden Folienkörper (19), der von der mindestens einen Dekorschicht (12, 14) ablösbar ist, aufweist, und die mindestens eine Dekorschicht (12, 14) durch die als eine Prägestruktur ausgebildete Strukturschicht (3) verformbar ist.

2. Mehrschichtkörper (100) nach Anspruch 1,
**dadurch gekennzeichnet,**
**dass** der Folienköper (19) eine separate Ablöseschicht (11) aufweist, mittels welcher der Folienkörper (19) von der mindestens einen Dekorschicht (12, 14) ablösbar ist.

3. Mehrschichtkörper (100) nach Anspruch 1.
**dadurch gekennzeichnet,**
**dass** eine Oberfläche des Folienkörpers (19) eine Ablöseschicht (11) bildet, so dass der Folienkörpers (19) aufgrund einer geeigneten Materialpaarung der aneinander angrenzenden Schichten von der mindestens einen Dekorschicht (12, 14) ablösbar ist,

4. Mehrschichtkörper (100) nach einem der vorhergehenden Ansprüche,
**dadurch gekennzeichnet,**
**dass** die Strukturschicht (3) vertiefte Bereiche (34) aufweist, die als Hohlräume (21) ausgebildet sind.

5. Mehrschichtkörper (100) nach einem der vorhergehenden Ansprüche,
**dadurch gekennzeiehnet,**
dass die Strukturschicht (3) vertiefte Bereiche (34) aufweist, die ein Material (4) aufweisen, das weicher als die Strukturen der Strukturschicht (3) ist.

6. Mehrschichtkörper (100) nach einem der vorhergehenden Ansprüche,
**dadurch gekennzeichnet,**
**dass** die Strukturschicht (3) einen strahlungshärtbaren Lack aufweist, der vollständig ausgehärtet ist und/oder die mindestens eine Dekorschicht (12, 14) einen strahlungshärtbaren Lack aufweist, der nicht vollständig ausgehärtet ist.

7. Mehrschichtkörper (100) nach einem der vorhergehenden Ansprüche,
**dadurch gekennzeichnet,**
**dass** die Strukturschicht(3) eine Dicke im Bereich von 5 bis 250 µm aufweist und /oder die Strukturschicht (3) eine Strukturtiefe (32) im Bereich von 5 bis 250 µm aufweist.

8. Mehrschichtkörper (100) nach einem der vorhergehenden Ansprüche,
**dadurch gekennzeichnet,**
**dass** benachbarte erhöhte Bereiche (33) und/oder benachbarte vertiefte Bereiche (34) der Strukturschicht (3) einen Abstand (35) im Bereich von 1 µm bis 50 cm aufweisen.

9. Mehrschichtkörper (100) nach einem der vorhergehenden Ansprüche,
**dadurch gekennzeichnet,**
**dass** die mindestens eine Dekorschicht (12, 14) mindestens eine Schutzschicht und/oder mindestens eine Schicht mit einem dekorativen Effekt umfasst, wobei der dekorative Effekt insbesondere durch eine zumindest partiell angeordnete, gegebenenfalls spiegelnd reflektierende Metallschicht und/oder eine zumindest partiell angeordnete Interferenzschicht und/oder eine zumindest partiell angeordnete Replizierschicht mit Reliefstrukturen wie makroskopischen Reliefstrukturen, diffraktiven Strukturen oder Hologrammen und/oder eine zumindest partiell angeordnete Farbschicht und/oder eine zumindest partiell angeordnete pigmentierte Schicht erzeugt ist, die fluoreszierende, phosphoreszierende, thermochrome oder photochrome Pigmente oder Pigmente mit blickwinkelabhängigen Farbwechseleffekten aufweist.

10. Verfahren zur Herstellung eines Mehrschichtkörpers (100) nach einem der Ansprüche 1 bis 9, wobei das Verfahren folgende Schritte umfasst:
a) Bereitstellen einer Relieffolie (1) mit einer ersten Trägerfolie (2) und einer auf einer Seite der ersten Trägerfolie (2) angeordneten Strukturschicht (3);
b) Bereitstellen einer Mehrschichtfolie (5) mit einer zweiten Trägerfolie (10, 17) und mindestens einer Dekorschicht (12, 14); und
c) Verbinden der Relieffolie (1) und der Mehrschichtfolie (5) so, dass die Strukturschicht (3) zwischen der ersten Trägerfolie (2) und der zweiten Trägerfolie (10, 17) angeordnet ist.

11. Verfahren nach Anspruch 10,
**dadurch gekennzeichnet,**
**dass** der Schritt a) umfasst:
Aufdrucken der Strukturschicht (3) auf die erste Trägerfolie (2), vorzugsweise mittels Siebdruck, oder
**dass** der Schritt a) umfasst:
Aufbringen einer die Strukturschicht (3) bildenden, strahlungshärtbaren Replizierlackschicht auf die erste Trägerfolie (2);
Abformen eines Reliefs in die Replizierlackschicht; und
Aushärten der Replizierlackschicht.

12. Verfahren zur Herstellung eines dekorierten, ein Oberflächenrelief (40) aufweisenden Spritzgussartikelts (50), wobei das Verfahren folgende Schritte umfasst:
A) Anordnen eines Mehrschichtkorpers (100) nach einem der Ansprüche 1 bis 9 in einer Spritzgussform (20) derart, dass die erste Trägerfoltie (2) an einer Innenwandung der Spritzgussform (20) anliegt;
B) Hinterspritzen des Mehrschichtkörpers (100) mit einer Kunststoffspritzmasse derart, dass die Strukturschicht (3) einer oder mehreren der mindestens einen Dekorschicht (12, 14) ein Relief aufprägt;
C) Aushärten der Kunststoffspritzmasse zu einem Kunststoffmaterial (25);
D) Entfernen des ausgehärteten Kunststoffmaterials (25) einschließlich des darauf angeordneten Mehrschichtkörpers (100) aus der Spritzgussform (20); und
E) Abziehen eines Folienkörpers (19) umfassend die Relieffolie (1) von dem Kunststoffmaterial (21) und der damit fest verbundenen mindestens einen Dekorschicht (12, 14), wobei das Kunststoffmaterial (21) und die damit fest verbundene mindestens eine Dekorschicht (12, 14) den dekorierten, ein Oberflächenrelief (40) aufweisenden Spritzgussartikel (50) bereitstellen.

13. Verfahren nach Anspruch 12,
**dadurch gekennzeichnet,**
**dass** der Schritt B) umfasst:
Einspritzen der Kunststoffspritzmasse in die Spritzgussform (20) so, dass die Kunststoffspritzmasse mit einer von der Innenwandung der Spritzgussform (20) abgekehrten Seite des Mehrschichtkörpers (100) in Kontakt kommt;
Einstellen des Drucks der eingespritzten Kunststoffspritzmasse so, dass die Mehrschichtfolie (5) in Richtung der Innenwandung der Spritzgussform (20) gegen die Relieffolie (1) gedrückt wird; und
Aufrechterhalten des Drucks der eingespritzten Kunststoffspritzmasse, bis ein Relief der Strukturschicht (3) in einer vorgegebenen Einprägtiefe in die eine oder mehreren der mindestens einen Dekorschicht (12, 14) eingeprägt ist.

14. Verfahren nach einem der Ansprüche 12 oder 13,
**dadurch gekennzeichnet,**
**dass** ein Mehrschichtkörper (100) in der Spritzgussform (20) angeordnet wird, bei dem die Mehrschichtfolie (5) in der folgenden Reihenfofge an die Strukturschicht (3) anschließend die mindestens eine Dekorschicht (12, 14) und die zweite Trägerfolie (17) umfasst,
**dass** der Folienkörper (19) von dem Kunststoffmaterial (21), der damit fest verbundenen mindestens einen Dekorschicht (12, 14) und der damit fest verbundenen zweiten Trägerfolie (17) abgezogen wird, wobei das Kunststoffmaterial (21), die damit fest verbundene mindestens eine Dekorschicht (12, 14) und die damit fest verbundene zweite Trägerfolie (17) den dekorierten, ein Oberflächenrelief (40) aufweisenden Spritzgussartikel (50) bereitstellen, und
**dass** das Verfahren weiter folgende Schritte umfasst, die vor dem Schritt A) ausgeführt werden:
Umformen des Mehrschichtkörpers (100) in eine gewünschte Form durch Anwendung von Wärme und Druck, insbesondere durch Tiefziehen; und
Beschneiden des umgeformten Mehrschichtkörpers (100) entlang einer definierten Konturlinie.

15. Verfahren zur Herstellung eines dekorierten, ein Oberflächenrelief (40) aufweisenden Kunststoffartikels (50) mittels Heißprägen, wobei das Verfahren folgende Schritte umfasst:
α) Anordnen eines Mehrschichtkörpers (100) nach einem der Ansprüche 1 bis 9 auf einem Substrat derart, dass die Relieffolie (1) dem Substrat abgewandt ist;
β) Heißprägen des Mehrschichtkörpers (100) auf das Substrat; und
y) Abziehen eines Folienkörpers (19) umfassend die Relieffolie (1) von dem Substrat und der damit fest verbundenen mindestens einen Dekorschicht (12, 14), wobei das Substrat und die damit fest verbundene mindestens eine Dekorschicht (12, 14) den dekorierten, ein Oberflächenrelief (40) aufweisenden Kunststoffartikel (50) bereitstellen.

## Claims

1. Multilayer body (100) for the production of a decorated plastic article (50) having a surface relief (40), comprising a relief film (1) having a first carrier film (2) and a structural layer (3) arranged on one side of the first carrier film (2) and comprising a multilayer film (5) having a second carrier film (10, 17) and at least one decorative layer (12, 14), wherein the structural layer (3) is arranged between the first carrier film (2) and the second carrier film (10, 17), the multilayer body (100) has a film body (19) comprising the relief film (1), which can be separated from the at least one decorative layer (12, 14), and the at least one decorative layer (12, 14) can be deformed by the structural layer (3) that is formed as an embossed structure.

2. Multilayer body (100) according to claim 1,
**characterised in that**,
the film body (19) has a separate release layer (11), by means of which the film body (19) can be separated from the at least one decorative layer (12, 14).

3. Multilayer body (100) according to claim 1,
**characterised in that**,
a surface of the film body (19) forms a release layer (11), such that the film body (19) can be separated from the at least one decorative layer (12, 14) due to a suitable material pairing of the layers that border each other.

4. Multilayer body (100) according to one of the preceding claims,
**characterised in that**,
the structural layer (3) has recessed regions (34) that are designed as hollow spaces (21).

5. Multilayer body (100) according to one of the preceding claims,
**characterised in that**,
the structural layer (3) has recessed regions (34), which have a material (4) that is softer than the structures of the structural layer (3).

6. Multilayer body (100) according to one of the preceding claims,
**characterised in that**,
the structural layer (3) has a radiation-curable coating that is completely cured and/or the at least one decorative layer (12, 14) has a radiation-curable coating that is not completely cured.

7. Multilayer body (100) according to one of the preceding claims,
**characterised in that**,
the structural layer (3) has a thickness in the range of 5 to 250µm and/or the structural layer (3) has a structural depth (32) in the range of 5 to 250 µm.

8. Multilayer body (100) according to one of the preceding claims,
**characterised in that**,
adjacent, raised regions (33) and/or adjacent, recessed regions (34) of the structural layer (3) have a spacing (35) in the range of 1 µm to 50 cm.

9. Multilayer body (100) according to one of the preceding claims,
**characterised in that**,
the at least one decorative layer (12, 14) comprises at least one protective layer and/or at least one layer with a decorative effect, wherein the decorative effect is produced by an at least partially arranged, potentially specularly reflective metallic layer, and/or an at least partially arranged interference layer and/or an at least partially arranged replication layer having relief structures such as macroscopic relief structures, diffractive structures or holograms and/or an at least partially arranged coloured layer and/or an at least partially arranged pigmented layer, said layer having phosphorescent, thermochromic or photochromic pigments or pigments with colour change effects that are dependent on the viewing angle.

10. Method for the production of a multilayer body (100) according to one of claims 1 to 9, wherein the method comprises the following steps:
a) providing a relief film (1) having a first carrier film (2) and a structural layer (3) arranged on one side of the first carrier film (2);
b) providing a multilayer film (5) having a second carrier film (10, 17) and at least one decorative layer (12, 14); and
c) connecting the relief film (1) and the multilayer body (5) in such a way that the structural layer (3) is arranged between the first carrier film (2) and the second carrier film (10, 17).

11. Method according to claim 10,
**characterised in that**,
step a) comprises:
printing the structural layer (3) onto the first carrier film (2), preferably by means of screen printing, or
step a) comprises:
applying a radiation-curable replication layer, which forms the structural layer (3), to the first carrier film (2);
moulding a relief into the replication layer; and
curing the replication layer.

12. Method for the production of a decorated injection moulding article (50) having a surface relief (40), wherein the method comprises the following steps:
A) arranging a multilayer body (100) according to one of claims 1 to 9 in an injection mould (20) in such a way that the first carrier film (2) adjoins an inner wall of the injection mould (20);
B) back-moulding the multilayer body (100) with a plastic sprayed material in such a way that the structural layer (3) impresses a relief into one or more of the at least one decorative layer (12, 14);
C) curing the plastic sprayed material into a plastic material (25);
D) removing the cured plastic material (25), including the multilayer body (100) arranged thereon, from the injection mould (20); and
E) removing a film body (19), comprising the relief film (1), from the plastic material (21) and the at least one decorative layer (12, 14) that is connected tightly thereto, wherein the plastic material (21) and the at least one decorative layer (12, 14) connected tightly thereto provide the decorated injection moulding article (50) having a surface relief (40).

13. Method according to claim 12,
**characterised in that**,
step B) comprises:
injecting the plastic spraying material into the injection mould (20) in such a way that the plastic spraying material comes into contact with a side of the multilayer body (100) that is turned away from the inner wall of the injection mould (20);
adjusting the pressure of the injected plastic spraying material in such a way that the multilayer film (5) is pressed against the relief film (1) in the direction of the inner wall of the injection mould (20); and
maintaining the pressure of the injected plastic spraying material until a relief of the structural layer (3) is imprinted into one or more of the at least one decorative layer (12, 14) at a predetermined imprinting depth.

14. Method according to one of claims 12 or 13,
**characterised in that**,
a multilayer body (100) is arranged in the injection mould (20), in which the multilayer film (5), in the following order starting from the structural layer (3), comprises the at least one decorative layer (12, 14) and the second carrier film (17),
the film body (19) is removed from the plastic material (21), the at least one decorative layer (12, 14) connected tightly thereto and the second carrier film (17) connected tightly thereto, wherein the plastic material (21), the at least one decorative layer (12, 14) connected tightly thereto and the second carrier film (17) connected tightly thereto provide the decorated injection moulding article (50) having a surface relief (40), and
the method further comprises the following steps, which are performed before step A):
moulding the multilayer body (100) into a desired shape by applying heat and pressure, in particular by deep drawing; and
cutting the moulded multilayer body (100) along a defined contour line.

15. Method for the production of a decorated plastic article (50) having a surface relief (40) by means of hot embossing, wherein the method comprises the following steps:
α) arranging a multilayer body (100) according to one of claims 1 to 9 on a substrate in such a way that the relief film (1) is facing away from the substrate;
ß) hot embossing the multilayer body (100) onto the substrate; and
γ) removing a film body (19), comprising the relief film (1), from the substrate and the at least one decorative layer (12, 14) connected tightly thereto, wherein the substrate and the at least one decorative layer (12, 14) connected tightly thereto provide the decorated plastic article (50) having a surface relief (40).

## Revendications

1. Corps multicouche (100) servant à fabriquer un article en plastique (50) décoré présentant un relief en surface (40), comprenant une feuille en relief (1) dotée d'une première feuille de support (2) et d'une couche de structure (3) disposée sur un côté de la première feuille de support (2) ainsi qu'une feuille multicouche (5) dotée d'une deuxième feuille de support (10, 17) et d'au moins une couche décorative (12, 14), sachant que la couche de structure (3) est disposée entre la première feuille de support (2) et la deuxième feuille de support (10, 17), que le corps multicouche (100) présente un corps de feuille (19) comprenant la feuille en relief (1) et pouvant être détaché de la au moins une couche décorative (12, 14) et que la au moins une couche décorative (12, 14) peut être déformée par la couche de structure (3) réalisée sous la forme d'une structure estampée.

2. Corps multicouche (100) selon la revendication 1,
**caractérisé en ce que** :
le corps de feuille (19) présente une couche détachable (11) séparée, au moyen de laquelle le corps de feuille (19) peut être détaché de la au moins une couche décorative (12, 14).

3. Corps multicouche (100) selon la revendication 1,
**caractérisé en ce que** :
une surface du corps de feuille (19) forme une couche détachable (11) de sorte que le corps de feuille (19) peut être détaché de la au moins une couche décorative (12, 14) du fait d'un appariement de matériau adapté des couches adjacentes les unes aux autres.

4. Corps multicouche (100) selon l'une quelconque des revendications précédentes,
**caractérisé en ce que** :
la couche de structure (3) présente des zones plus profondes (34) qui sont réalisées sous la forme de cavités (21).

5. Corps multicouche (100) selon l'une quelconque des revendications précédentes,
**caractérisé en ce que** :
la couche de structure (3) présente des zones plus profondes (34) qui présentent un matériau (4) qui est plus mou que les structures de la couche de structure (3).

6. Corps multicouche (100) selon l'une quelconque des revendications précédentes,
**caractérisé en ce que** :
la couche de structure (3) présente un vernis durcissable sous l'effet d'un rayonnement, qui est intégralement durci, et/ou la au moins une couche décorative (12, 14) présente un vernis durcissable sous l'effet d'un rayonnement, qui n'est pas intégralement durci.

7. Corps multicouche (100) selon l'une quelconque des revendications précédentes,
**caractérisé en ce que** :
la couche de structure (3) présente une épaisseur comprise dans la plage allant de 5 à 250 µm, et/ou la couche de structure (3) présente une profondeur de structure (32) comprise dans la plage allant de 5 à 250 µm.

8. Corps multicouche (100) selon l'une quelconque des revendications précédentes,
**caractérisé en ce que** :
des zones adjacentes plus élevées (33) et/ou des zones adjacentes plus profondes (34) de la couche de structure (3) présentent un écartement (35) compris dans la plage allant de 1 µm à 50 cm.

9. Corps multicouche (100) selon l'une quelconque des revendications précédentes,
**caractérisé en ce que** :
la au moins une couche décorative (12, 14) comprend au moins une couche de protection et/ou au moins une couche dotée d'un effet décoratif, sachant que l'effet décoratif est produit en particulier par une couche métallique disposée au moins de manière partielle, éventuellement réfléchissante à la manière d'un miroir, et/ou par une couche d'interférence disposée au moins de manière partielle, et/ou par une couche de réplication disposée au moins de manière partielle et dotée de structures en relief telles que des structures en relief macroscopiques, des structures diffractives ou des hologrammes, et/ou par une couche de couleur disposée au moins de manière partielle, et/ou par une couche pigmentée disposée au moins de manière partielle, laquelle présente des pigments fluorescents, phosphorescents, thermochromes ou photochromes ou des pigments présentant des effets de changement de couleur en fonction de l'angle de vision.

10. Procédé de fabrication d'un corps multicouche (100) selon l'une quelconque des revendications 1 à 9, sachant que le procédé comprend les étapes suivantes consistant à :
a) fournir une feuille en relief (1) dotée d'une première feuille de support (2) et d'une couche de structure (3) disposée sur un côté de la première feuille de support (2) ;
b) fournir une feuille multicouche (5) dotée d'une deuxième feuille de support (10 ; 17) et d'au moins une couche décorative (12, 14) ;
c) relier la feuille en relief (1) et la feuille multicouche (5) de telle manière que la couche de structure (3) soit disposée entre la première feuille de support (2) et la deuxième feuille de support (10, 17).

11. Procédé selon la revendication 10,
**caractérisé en ce que** :
l'étape a) comprend l'étape consistant à :
imprimer la couche de structure (3) sur la première feuille de support (2), de préférence au moyen d'une sérigraphie, ou
l'étape a) comprend l'étape consistant à :
appliquer une couche de vernis de réplication, formant la couche de structure (3), durcissable sous l'effet d'un rayonnement, sur la première feuille de support (2) ;
mouler un relief dans la couche de vernis de réplication ; et
durcir la couche de vernis de réplication.

12. Procédé servant à fabriquer un article moulé par injection (50), décoré, présentant un relief en surface (40), sachant que le procédé comprend les étapes suivantes consistant à :
A) disposer un corps multicouche (100) selon l'une quelconque des revendications 1 à 9 dans un moule de moulage par injection (20) de telle manière que la première feuille de support (2) repose au niveau d'une paroi intérieure du moule de moulage par injection (20) ;
B) injecter dans le corps multicouche (100) une matière plastique moulée par injection de telle manière que la couche de structure (3) d'une ou de plusieurs de la au moins une couche décorative (12, 14) imprime un relief ;
C) durcir la matière plastique moulée par injection pour obtenir un matériau en matière plastique (25) ;
D) enlever du moule de moulage par injection (20) le matériau en matière plastique (25) durci, y compris le corps multicouche (100) disposé sur ce dernier ; et
E) retirer un corps de feuille (19) comprenant la feuille en relief (1) du matériau plastique (21) et de la au moins une couche décorative (12, 14) reliée de manière fixe à ce dernier, sachant que le matériau plastique (21) et la au moins une couche décorative (12, 14) reliée de manière fixe à ce dernier fournissent l'article moulé par injection (50), décoré, présentant un relief en surface (40).

13. Procédé selon la revendication 12,
**caractérisé en ce que** :
l'étape B) comprend l'étape consistant à :
injecter de la matière plastique moulée par injection dans le moule de moulage par injection (20) de sorte que la matière plastique moulée par injection vienne en contact avec un côté, opposé à la paroi intérieure du moule de moulage par injection (20), du corps multicouche (100) ;
ajuster la pression de la matière plastique moulée par injection, injectée de sorte que la feuille multicouche (5) soit pressée contre la feuille en relief (1) en direction de la paroi intérieure du moule de moulage par injection (20) ; et
maintenir la pression de la matière plastique moulée par injection, injectée jusqu'à ce qu'un relief de la couche de structure (3) soit incrusté dans l'une ou les plusieurs de la au moins une couche décorative (12, 14) en une profondeur d'incrustation prédéfinie.

14. Procédé selon l'une quelconque des revendications 12 ou 13,
**caractérisé en ce que** :
un corps multicouche (100) est disposé dans le moule de moulage par injection (20), dans le cadre duquel la feuille multicouche (5) comprend, dans l'ordre suivant, à la suite de la couche de structure (3), la au moins une couche décorative (12, 14) et la deuxième feuille de support (17),
le corps de feuille (19) est retiré du matériau plastique (21), de la au moins une couche décorative (12, 14) reliée de manière fixe à ce dernier et de la deuxième feuille de support (17) reliée de manière fixe à cette dernière, sachant que le matériau plastique (21), la au moins une couche décorative (12, 14) reliée de manière fixe à ce dernier et la deuxième feuille de support (17) reliée de manière fixe à cette dernière fournissent l'article moulé par injection (50), décoré, présentant un relief en surface (40), et
le procédé comprend en outre les étapes suivantes qui sont exécutées avant l'étape A), consistant à :
mettre en forme le corps multicouche (100) selon une forme souhaitée, par application de chaleur et de pression, en particulier par emboutissage ; et
découper le corps multicouche (100) mis en forme, le long d'une ligne de contour définie.

15. Procédé servant à fabriquer un article en plastique (50), décoré, présentant un relief en surface (40) au moyen d'un estampage à chaud, sachant que le procédé comprend les étapes suivantes consistant à :
α) disposer un corps multicouche (100) selon l'une quelconque des revendications 1 à 9 sur un substrat de telle manière que la feuille en relief (1) est opposée au substrat ;
ß) estamper à chaud le corps multicouche (100) sur le substrat ; et
γ) retirer du substrat et de la au moins une couche décorative (12, 14) reliée de manière fixe à ce dernier un corps de feuille (19) comprenant la feuille en relief (1), sachant que le substrat et la au moins une couche décorative (12, 14) reliée à ce dernier de manière fixe fournissent l'article en plastique (50) décoré présentant un relief en surface (40).
